# EUROPEAN PATENT SPECIFICATION

(11) **EP 3 354 701 B1**
(45) Date of publication and mention of the grant of the patent: **10.06.2020**
(21) Application number: 16848689.2
(22) Date of filing: 23.09.2016
(51) Int. Cl.: C09D 201/02, C09C 1/00, C09C 3/10, C09D 5/02, C09D 5/44, C09D 175/04, C09D 7/61, C08K 3/22

(54) **METHOD FOR PREPARING CATIONIC ELECTRODEPOSITION COATING COMPOSITION**
VERFAHREN ZUR HERSTELLUNG EINER KATIONISCHEN ELEKTROTAUCHLACKIERUNGSZUSAMMENSETZUNG
PROCÉDÉ DE PRÉPARATION D'UNE COMPOSITION DE REVÊTEMENT PAR ÉLECTRODÉPOSITION CATIONIQUE

(30) Priority: 25.09.2015 JP 2015188732
(43) Date of publication of application: 01.08.2018
(73) Proprietor: Nippon Paint Automotive Coatings Co., Ltd., Osaka 573-1153 (JP)
(72) Inventor: MIYAMAE, Nobuhiro, Hirakata-shi Osaka 573-1153 (JP); OHTA, Tatsuo, Hirakata-shi Osaka 573-1153 (JP)
(74) Representative: Mewburn Ellis LLP
(86) International application number: PCT/JP2016/078113
(87) International publication number: WO 2017/051901

(56) References cited:
- WO-A1-2010/077384
- WO-A1-2013/035765
- GB-A- 2 264 504
- JP-A- 2002 356 647
- JP-A- 2005 194 389
- JP-A- 2007 284 603
- JP-A- 2008 174 819

## Description

### FIELD OF THE INVENTION

The present invention relates to a method for preparing a cationic electrodeposition coating composition having excellent edge portion rust prevention property.

### BACKGROUND OF THE INVENTION

On a surface of an object to be coated, such as a metallic base material, a plurality of coating films having various roles are formed, so that the object to be coated is protected, and a beautiful appearance is imparted. In general, electrodeposition coating films formed by electrodeposition coating are widely used as coating films for imparting anticorrosion property to an object to be coated. Electrodeposition coating has been widely put into practical use particularly as a method for undercoating a large-sized and complicatedly shaped object to be coated, such as an automobile body, because details of even a complicatedly shaped object can be coated, and coating can be performed automatically and continuously. As such electrodeposition coating, electrodeposition coating using a cationic electrodeposition coating composition is widely employed.

A coating film is required to impart anticorrosion property to an object to be coated, and is also required to have a favorable surface state. As means for improving the surface state of a coating film, mention is made of a method for improving the leveling property of a coating film during formation of the coating film. For example, a coating film can be leveled by a thermal flow during curing by heating etc. to improve the surface state of the coating film. On the other hand, when an object to be coated has an edge portion, it is difficult to coat the edge portion even when electrodeposition coating is employed. Further, the leveling action and thermal flow may cause a coating film to flow from an edge portion during heating and curing, resulting in deterioration of rust prevention property. Thus, in coating of an object to be coated, which has an edge portion, means for improving the rust prevention property of the edge portion is required.

As a method for improving the rust prevention property of an edge portion, mention is made of, for example, a method in which the flow of an electrodeposition coating film due to a thermal flow during heating and curing of the electrodeposition coating film is suppressed to secure the thickness at an edge portion, so that rust prevention property is improved. This method includes, for example, a method in which the viscosity of an electrodeposition coating composition is increased by a method such as addition of a thickener in the electrodeposition coating composition for suppressing the flow of a coating film due to a thermal flow during heating and curing. However, addition of a thickener to an electrodeposition coating composition deteriorates the leveling property of a coating film, so that a portion other than an edge portion, such as a flat portion, has a poor surface state. Thus, it is generally difficult to improve both the rust prevention property of an edge portion of an object to be coated and the surface state of a coating film (the smoothness of the coating film).

Japanese Patent Application Publication No. 2010-144104 (Patent Document 1) discloses a cationic electrodeposition coating composition including, as essential components, (a) an amine-modified epoxy resin having an amine concentration of 1.0 mol/kg or more, (b) a blocked isocyanate compound, and (c) cation ion-exchanged amorphous silica fine particles. It is suggested that the cationic electrodeposition coating composition can form a coating film excellent in smoothness and edge covering property for an object to be coated (paragraph [0001] etc.). Patent Document 1 suggests that edge covering property can be improved by exhibiting a structural viscosity behavior derived from the component (c) (paragraph [0029] etc.). On the other hand, the component (c) is a granular substance, and therefore may be aggregated in an electrodeposition coating composition, leading to deterioration of the smoothness of the resulting coating film. It is suggested in, for example, paragraph [0032] that smoothness is deteriorated when the amount of the component (c) is large.

Japanese Patent Application Publication No. H5(1993)-239386 (Patent Document 2) discloses an electrodeposition coating composition including at least one lanthanum compound. In the electrodeposition coating composition disclosed in Patent Document 2, the lanthanum compound is basically contained in a pigment paste.

GB 2 264 504 A discloses preparing a cationic electrodeposition coating composition by mixing: a resin emulsion comprising an aminated epoxy resin and a blocked isocyanate curing agent; and a pigment dispersion paste comprising a pigment dispersion resin (epoxy resin having quaternary ammonium groups), lanthanum oxide and pigments.

WO 2010/077384 A1 discloses preparing a cationic electrodeposition coating composition by mixing: a resin emulsion comprising an aminated epoxy resin and a blocked isocyanate curing agent; and a pigment dispersion paste comprising a pigment dispersion resin (aminated epoxy resin), yttrium oxide and pigments.

### PRIOR ART DOCUMENTS

### PATENT DOCUMENTS

Patent Document 1: Japanese Patent Application Publication No. 2010-144104
Patent Document 2: Japanese Patent Application Publication No. H5(1993)-239386

### SUMMARY OF THE INVENTION

### PROBLEMS TO BE RESOLVED BY THE INVENTION

The present invention solves the above-described problems of conventional techniques, and an object of the present invention is to provide a method for preparing an electrodeposition coating composition capable of forming a cured coating film which is excellent in edge portion rust prevention property and has an excellent coating film appearance.

### MEANS OF SOLVING THE PROBLEMS

For solving the above-described problems, the present invention provides the following aspects.
[1] A method for preparing a cationic electrodeposition coating composition, wherein the method contains a step of mixing a resin emulsion (i) and a pigment dispersion paste, wherein
   the resin emulsion (i) contains an aminated resin (A) and a blocked isocyanate curing agent (B),
   the pigment dispersion paste contains a metal compound (C), a pigment dispersion resin (D) and a pigment (E), and wherein
   the metal compound (C) is one or more a metal oxide or a metal hydroxide having at least one metal element selected from the group consisting of La, Nd, Y, Pr, Yb and Ce,
   the pigment dispersion paste is prepared by mixing the metal compound (C) and the pigment dispersion resin (D), and mixing the resultant mixture, the pigment dispersion resin (D) and the pigment (E).
[2] A method for preparing a cationic electrodeposition coating composition, wherein the method contains a step of mixing a resin emulsion (i) and a pigment dispersion paste, wherein
   the resin emulsion (i) contains an aminated resin (A) and a blocked isocyanate curing agent (B),
   the pigment dispersion paste contains a metal compound (C), a pigment dispersion resin (D), a sequestrant (G) and a pigment (E), and wherein
   the metal compound (C) is one or more a metal oxide or a metal hydroxide having at least one metal element selected from the group consisting of La, Nd, Y, Pr, Yb and Ce,
   the sequestrant (G) contains one or more selected from the group consisting an amine-modified epoxy resin (G-1) having a hydroxyl value of 150 to 650 mg KOH/g and an amine value of 30 to 190 mg KOH/g and a polyvalent acid (G-2), and
   the pigment dispersion paste is prepared by mixing the metal compound (C), the pigment dispersion resin (D) and the sequestrant (G), and
   mixing the resultant mixture, the pigment dispersion resin (D) and the pigment (E).
[3] A method for preparing a cationic electrodeposition coating composition, wherein the method contains a step of mixing a resin emulsion (i) and a pigment dispersion paste, wherein
   the resin emulsion (i) contains an aminated resin (A) and a blocked isocyanate curing agent (B),
   the pigment dispersion paste contains a metal compound (C), a pigment dispersion resin (D), an organic acid (F), a sequestrant (G) and a pigment (E), and wherein
   the metal compound (C) is one or more a metal oxide or a metal hydroxide having at least one metal element selected from the group consisting of La, Nd, Y, Pr, Yb and Ce,
   The organic acid (F) is one or more compound selected from the group consisting of a hydroxymonocarboxylic acid and a sulfonic acid,
   the sequestrant (G) contains one or more selected from the group consisting of an amine-modified epoxy resin (G-1) having a hydroxyl value of 150 to 650 mg KOH/g and an amine value of 30 to 190 mg KOH/g and a polyvalent acid (G-2), and
   the pigment dispersion paste is prepared by
   mixing the metal compound (C) and the organic acid (F), and mixing the resultant mixture, the pigment dispersion resin (D) and the sequestrant (G), and mixing the pigment (E).
[4] The method for preparing a cationic electrodeposition coating composition according to the [2] or [3], wherein
   the polyvalent acid (G-2) is one or more selected from the group consisting of a compound having two or more carboxylic acid groups, and a compound having a phosphoric acid group.
[5] The method for preparing a cationic electrodeposition coating composition according to any of the [2] to [4], wherein
   the polyvalent acid (G-2) is one or more selected from the group consisting of tartaric acid, citric acid, phosphoric acid, condensed phosphoric acid, malic acid and polyacrylic acid.
[6] The method for preparing a cationic electrodeposition coating composition according to the [3], wherein
   a ratio of the number of moles of the metal in the metal compound (C) to the number of moles of the organic acid (F) ((C) : (F)) is in a range of 1 : 0.3 to 1 : 2.7.
[7] The method for preparing a cationic electrodeposition coating composition according to the [3] or [6], wherein
   the organic acid (F) is one or more selected from the group consisting of lactic acid, dimethylolpropionic acid and methanesulfonic acid.
[8] The method for preparing a cationic electrodeposition coating composition, wherein
   the metal element in the metal compound (C) is La.
[9] The method for preparing a cationic electrodeposition coating composition, wherein
   an amount of the metal compound (C) is 0.01 to 2% by mass in terms of a metal element based on a solid content of the resin emulsion (i) in the electrodeposition coating composition.
[10] The method for preparing a cationic electrodeposition coating composition, wherein
   a ratio of the pigment (E) to the pigment dispersion resin (D) ((E) : (D)) in terms of a solid mass ratio is in a range of 1 : 0.1 to 1 : 1.5.
[11] The method for preparing a cationic electrodeposition coating composition, wherein a bismuth compound (H) is mixed together in the mixing of the pigment (E).
[12] The method for preparing a cationic electrodeposition coating composition, wherein a bismuth compound (H) is mixed together in the mixing of the metal compound (C).

### ADVANTAGEOUS EFFECT OF THE INVENTION

By performing electrodeposition coating using the electrodeposition coating composition obtained by the method for preparing a electrodeposition coating composition of the present invention, a cured coating film which is excellent in edge portion rust prevention property and has an excellent coating film appearance can be formed.

### DETAILED DESCRIPTION OF THE PREFERRED EMBODIMENTS

The method for preparing a cationic electrodeposition coating composition according to the present invention includes a step of preparing a pigment dispersion paste containing a metal compound (C) being one or more a metal oxide or a metal hydroxide having at least one metal element selected from the group consisting of La, Nd, Y, Pr, Yb and Ce. The preparation method according to the present invention is characterized by preparing a pigment dispersion paste containing the metal compound (C) by a specific process. The electrodeposition coating composition containing the pigment dispersed paste obtained by the above method can provide excellent edge portion rust prevention property, coating film appearance and coating performance.

### Resin emulsion (i)

An electrodeposition coating composition obtained by the preparation method or the present invention contains a resin emulsion (i) containing an aminated resin (A) and a blocked isocyanate curing agent (B). The resin emulsion (i) may further contain other components if necessary.

### Aminated resin (A)

The aminated resin (A) is a coating film-forming resin that forms an electrodeposition coating film. The aminated resin (A) is preferably a cation-modified epoxy resin obtained by modifying an oxirane ring in a resin skeleton with an organic amine compound. Generally, a cation-modified epoxy resin is prepared by opening an oxirane ring in a starting material resin molecule by reaction with an amine compound such as a primary amine, a secondary amine or a tertiary amine and/or an acid salt thereof. Typical examples of the starting material resin include polyphenol polyglycidyl ether-type epoxy resins which are reaction products of a polycyclic phenol compound such as bisphenol A, bisphenol F, bisphenol S, phenol novolac or cresol novolak and epichlorohydrin. Other examples of the starting material resin may include oxazolidone ring-containing epoxy resins as described in Japanese Patent Application Publication No. H5(1993)-306327. These epoxy resins can be prepared by reacting epichlorohydrin with diisocyanate compound, or a bisurethane compound obtained by blocking an isocyanate group of a diisocyanate compound with a lower alcohol such as methanol or ethanol.

Before the ring-opening reaction of the oxirane ring with the amine compound, the starting material resin can be chain-extended with a difunctional polyester polyol, polyether polyol, bisphenol, dibasic carboxylic acid or the like. In particular, a bisphenol may be used to chain-extend the starting material resin during the ring opening reaction of the oxirane ring with an amine.

Similarly, before the ring-opening reaction of the oxirane ring with the amine, a monohydroxy compound such as 2-ethylhexanol, nonylphenol, ethylene glycol mono-2-ethylhexyl ether, ethylene glycol mono-n-butyl ether or propylene glycol mono-2-ethylhexyl ether, or a monocarboxylic acid compound such as octylic acid can be added for the purpose of, for example, controlling the molecular weight or the amine equivalent, and improving thermal flow property.

Examples of the amine which can be used for opening the oxirane ring and introducing an amino group include primary amines, secondary amines and tertiary amines such as butylamine, octylamine, diethylamine, dibutylamine, methylbutylamine, monoethanolamine, diethanolamine, N-methylethanolamine, triethylamine, N,N-dimethylbenzylamine and N,N-dimethylethanolamine, and/or acid salts thereof. In addition, a secondary amine containing a ketimine-blocked primary amino group, such as aminoethylethanolamine methyl isobutyl ketimine, or diethylenetriamine diketimine can also be used. For opening all oxirane rings, such an amine should be reacted in at least an amount equivalent to that of the oxirane ring.

The number average molecular weight of the aminated resin (A) is preferably 1,000 to 5,000. When the number average molecular weight is 1,000 or more, physical properties, such as solvent resistance and corrosion resistance, of the resulting cured electrodeposition coating film are improved. On the other hand, when the number average molecular weight is 5,000 or less, it is easy to adjust the viscosity of the aminated resin, so that smooth synthesis is possible, and it is easy to handle emulsification and dispersion of the resulting aminated resin (A). The number average molecular weight of the aminated resin (A) is more preferably in a range of 1,600 to 3,200.

In this specification, the number average molecular weight is a number average molecular weight in terms of polystyrene as measured by gel permeation chromatography (GPC).

The amine value of the aminated resin (A) is preferably in a range of 20 to 100 mg KOH/g. When the amine value of the aminated resin (A) is 20 mg KOH/g or more, stability of emulsification and dispersion of the aminated resin (A) in the electrodeposition coating composition is improved. On the other hand, when the amine value is 100 mg KOH/g or less, the amount of amino groups in the cured electrodeposition coating film is appropriate, so that there is no risk of deteriorating water resistance of the coating film. The amine value of the aminated resin (A) is more preferably in a range of 20 to 80 mg KOH/g.

The hydroxyl value of the aminated resin (A) is preferably in a range of 50 to 400 mg KOH/g. When the hydroxyl value is 50 mg KOH/g or more, curing is improved in the cured electrodeposition coating film. On the other hand, when the hydroxyl value is 400 mg KOH/g or less, the amount of hydroxyl groups remaining in the cured electrodeposition coating film is appropriate, so that there is no risk of deteriorating the water resistance of the coating film. The hydroxyl value of the aminated resin (A) is more preferably in a range of 100 to 300 mg KOH/g.

Use of the aminated resin (A) having a number average molecular weight of 1,000 to 5,000, an amine value of 20 to 100 mg KOH/g and a hydroxyl value of 50 to 400 mg KOH/g in the electrodeposition coating composition of the present invention has an advantage that excellent corrosion resistance can be imparted to an object to be coated.

As the aminated resin (A), aminated resins having different amine values and/or hydroxyl values may be used in combination as necessary. When two or more aminated resins having different amine values and hydroxyl values are used in combination, the average amine value and the average hydroxyl value calculated on basis of the mass ratio of the aminated resin to be used are preferably in the above-described numerical value range. When the aminated resin (A) is a combination of aminated resins, it is preferable that an aminated resin having an amine value of 20 to 50 mg KOH/g and a hydroxyl value of 50 to 300 mg KOH/g, and an aminated resin having an amine value of 50 to 200 mg KOH/g and a hydroxyl value of 200 to 500 mg KOH/g are used in combination. Use of such a combination has an advantage that the emulsion has a more hydrophobic core portion and more hydrophilic shell portion, and therefore excellent corrosion resistance can be imparted.

The aminated resin (A) may contain an amino group-containing acrylic resin, an amino group-containing polyester resin or the like as necessary.

### Blocked isocyanate curing agent (B)

The blocked isocyanate curing agent (B) (hereinafter, sometimes referred to simply as a "curing agent (B)") is also a coating film-forming resin that forms an electrodeposition coating film. The blocked isocyanate curing agent (B) can be prepared by blocking a polyisocyanate with an encapsulant.

Examples of the polyisocyanate include aliphatic diisocyanates such as hexamethylene diisocyanate (including a trimer), tetramethylene diisocyanate and trimethylhexamethylene diisocyanate; cycloaliphatic polyisocyanates such as isophorone diisocyanate and 4,4'-methylene-bis-(cyclohexyl isocyanate); aromatic diisocyanates such as polyisocyanate, 4,4'-diphenylmethane diisocyanate, tolylene diisocyanate and xylylene diisocyanate; and modified products (urethanized products, and carbodiimide-, uretdione-, uretonimine-, burette-and/or isocyanurate-modified products).

Examples of the encapsulant that is preferably used include monovalent alkyl (or aromatic) alcohols such as n-butanol, n-hexyl alcohol, 2-ethylhexanol, lauryl alcohol, phenol carbinol and methylphenyl carbinol; cellosolves such as ethylene glycol monohexyl ether and ethylene glycol mono-2-ethylhexyl ether; diols with polyether-type both-ended diols such as polyethylene glycol, polypropylene glycol and polytetramethylene ether glycol phenol; polyester-type both-ended polyols obtained from a diol such as ethylene glycol, propylene glycol or 1,4-butanediol and a dicarboxylic acid such as oxalic acid, succinic acid, adipic acid, suberic acid or sebacic acid; phenols such as para-t-butylphenol and cresol; oximes such as dimethyl ketoxime, methyl ethyl ketoxime, methyl isobutyl ketoxime, methyl amyl ketoxime and cyclohexanone oxime; and lactams typified by ε-caprolactam and γ-butyrolactam.

The blocking ratio of the blocked isocyanate curing agent (B) may preferably be 100%. Accordingly, there is an advantage that storage stability of the electrodeposition coating composition is improved.

It may be preferable that as the blocked isocyanate curing agent (B), a curing agent prepared by blocking an aliphatic diisocyanate with an encapsulant and a curing agent prepared by blocking an aromatic diisocyanate with an encapsulant are used in combination.

The blocked isocyanate curing agent (B) preferentially reacts with the primary amine of the aminated resin (A), and further reacts with a hydroxyl group to be cured.

As the curing agent, at least one curing agent selected from the group consisting of an organic curing agent such as a melamine resin or a phenol resin, a silane coupling agent and a metal curing agent may be used in combination with the blocked isocyanate curing agent (B).

### Preparation of resin emulsion (i)

The resin emulsion (i) is prepared by dissolving each of the aminated resin (A) and the blocked isocyanate curing agent (B) in an organic solvent to prepare solutions, mixing the solutions, and then neutralizing the mixture using a neutralizing acid. Examples of the neutralizing acid include organic acids such as methanesulfonic acid, sulfamic acid, lactic acid, dimethylolpropionic acid, formic acid and acetic acid. In the present invention, it may be more preferable to neutralize a resin emulsion containing the aminated resin (A) and the curing agent (B) with at least one acid selected from the group consisting of formic acid, acetic acid and lactic acid.

Content of the curing agent (B) is required to be sufficient for reacting with an active hydrogen-containing functional group such as a primary amino group, a secondary amino group or a hydroxyl group in the aminated resin (A) during curing to give a favorable cured coating film. The content of the curing agent (B), in terms of a solid content mass ratio of the aminated resin (A) and the curing agent (B) (aminated resin (A)/curing agent (B)) may preferably be in a range of 90/10 to 50/50, more preferably 80/20 to 65/35. Adjustment of the solid content mass ratio of the aminated resin (A) and the curing agent (B) improves the flowability and the curing rate of the coating film (deposition film) during film formation, and improves the coating appearance.

Generally, a solid content of the resin emulsion (i) may preferably be 25 to 50% by mass, particularly preferably from 35 to 45% by mass, based on the total amount of the resin emulsion (i). Here, the "solid content of a resin emulsion" means the mass of all components which are contained in the resin emulsion and which remain as a solid even when a solvent is removed. Specifically, the "solid content of a resin emulsion" means the total mass of the aminated resin (A) and the curing agent (B) contained in the resin emulsion (i) and other solid components added to the resin emulsion (i) as necessary.

The neutralizing acid is used in an amount of more preferably 10 to 100%, still more preferably 20 to 70%, in terms of a ratio of the equivalent of the neutralizing acid to the equivalent of amino groups of the aminated resin (A). In this specification, the ratio of the equivalent of the neutralizing acid to the equivalent of amino groups of the aminated resin (A) is defined as a neutralization ratio. When the neutralization ratio is 10% or more, affinity for water is secured, so that water dispersibility is improved.

### Pigment dispersion paste

A method for preparing an electrodeposition coating composition according to the present invention includes any of the following three embodiments of a method for preparing a pigment dispersion paste.

### Embodiment 1

It is an embodiment wherein
the pigment dispersion paste contains a metal compound (C), a pigment dispersion resin (D) and a pigment (E), and wherein
the metal compound (C) is one or more a metal oxide or a metal hydroxide having at least one metal element selected from the group consisting of La, Nd, Y, Pr, Yb and Ce,
the pigment dispersion paste is prepared by
mixing the metal compound (C) and the pigment dispersion resin (D), and
mixing the resultant mixture, the pigment dispersion resin (D) and the pigment (E).

### Embodiment 2

It is an embodiment wherein
the pigment dispersion paste contains a metal compound (C), a pigment dispersion resin (D), a sequestrant (G) and a pigment (E), and wherein
the metal compound (C) is one or more a metal oxide or a metal hydroxide having at least one metal element selected from the group consisting of La, Nd, Y, Pr, Yb and Ce,
the sequestrant (G) contains one or more selected from the group consisting of an amine-modified epoxy resin (G-1) having a hydroxyl value of 150 to 650 mg KOH/g and an amine value of 30 to 190 mg KOH/g and a polyvalent acid (G-2), and
the pigment dispersion paste is prepared by
mixing the metal compound (C), the pigment dispersion resin (D) and the sequestrant (G), and
mixing the resultant mixture, the pigment dispersion resin (D) and the pigment (E).

### Embodiment 3

It is an embodiment wherein
the pigment dispersion paste contains a metal compound (C), a pigment dispersion resin (D), an organic acid (F), a sequestrant (G) and a pigment (E), and wherein
the metal compound (C) is one or more a metal oxide or a metal hydroxide having at least one metal element selected from the group consisting of La, Nd, Y, Pr, Yb and Ce,
The organic acid (F) is one or more compound selected from the group consisting of a hydroxymonocarboxylic acid and a sulfonic acid,
the sequestrant (G) contains one or more selected from the group consisting of an amine-modified epoxy resin (G-1) having a hydroxyl value of 150 to 650 mg KOH/g and an amine value of 30 to 190 mg KOH/g and a polyvalent acid (G-2), and
the pigment dispersion paste is prepared by
mixing the metal compound (C) and the organic acid (F), and
mixing the resultant mixture, the pigment dispersion resin (D) and the sequestrant (G), and mixing the pigment (E).

### Metal compound (C)

A metal compound (C) used in the preparation of a pigment dispersion paste is a rare earth compound which is a metal oxide and/or metal hydroxide containing at least one metal element selected from the group consisting of La, Nd, Y, Pr, Yb and Ce. The metal element contained in the metal compound (C) is preferably at least one selected from the group consisting of La, Nd, Y and Yb, more preferably La.
The electrodeposition coating composition according to the present invention contains the metal compound (C), which provides excellent edge portion rust prevention property. The present invention is characterized in that it can provide a method of dispersing the metal compound (C) in a pigment dispersion paste so that the metal compound (C) can stably exhibit excellent edge portion rust prevention property.

A content of the metal compound (C) is preferably 0.01 to 2% by mass, more preferably 0.05 to 1.5% by mass, still more preferably 0.20 to 1% by mass in terms of a metal element based on the solid content of the resin emulsion (i). When the amount of the metal compound (C) is below the above-mentioned range, it may be unable to attain excellent edge portion rust prevention property. When the content of the metal compound (C) exceeds the above-mentioned range, solubility and uniform dispersibility of the metal compound (C) deteriorates, and storage stability of the resin emulsion and electrodeposition coating composition may decrease, further, coating film appearance (color unevenness) of a resulting cured electrodeposition coating film may be deteriorated.

In this specification, the "solid content of a resin emulsion" means the mass of all components which are contained in the resin emulsion (i) and which remain as a solid even when a solvent is removed. Specifically, the "solid content of a resin emulsion" means the total mass of the aminated resin (A) and the blocked isocyanate curing agent (B) contained in the resin emulsion, and other solid components added to the resin emulsion as necessary.

The term "in terms of a metal element" means that a target metal element amount is determined by multiplying the content of a metal compound by a metal element conversion coefficient (a coefficient for converting a metal compound amount into a metal element amount, which specifically means a value obtained by dividing the atomic weight in a metal compound by the molecular weight of the metal compound). For example, when the metal of the metal compound (C) is lanthanum oxide (La₂O₃, molecular weight: 325.8), the content of lanthanum in terms of a metal element in the electrodeposition coating composition containing 0.1% by mass of lanthanum oxide is determined as 0.0853% by mass by calculating the formula: (0.1% by mass) × (277.8 ÷ 325.8).

The metal compound (C) is preferably in the form of a powder, and the average particle size thereof is preferably from 0.5 to 20 µm, more preferably from 1 to 3 µm. In this specification, the average particle size refers to a volume average particle diameter D50, which is a value measured with a dispersion diluted with ion-exchanged water so as to attain an appropriate signal level using a laser Doppler type particle size analyzer ("Microtrac UPA 150" manufactured by Nikkiso Co., Ltd.).

### Pigment dispersion resin (D)

A pigment dispersion resin (D) is a resin for dispersing the pigment. The pigment dispersion resin is dispersed in an aqueous medium, and used. As the pigment dispersion resin, a pigment dispersion resin having a cationic group, such as a modified epoxy resin having at least one selected from a quaternary ammonium group, a tertiary sulfonium group and a primary amine group, can be used. As the aqueous medium, ion-exchanged water or water containing a small amount of an alcohol, or the like is used.

As an example of the pigment dispersion resin (D), an amine-modified epoxy resin having a hydroxyl value of 20 to 120 mg KOH/g may preferably be used.
The amine-modified epoxy resin having a hydroxyl value of 20 to 120 mg KOH/g can be prepared by, for example, reacting half-blocked isocyanate with a hydroxyl group of a hydroxyl group-containing epoxy resin to introduce a blocked isocyanate group.

Generally, a polyepoxide is used as the epoxy resin. This epoxide has two or more 1,2-epoxy groups on average in one molecule. Useful examples of the polyepoxide include the above-mentioned epoxy resins.

The half-blocked isocyanate used for reaction with the epoxy resin is prepared by partially blocking a polyisocyanate. Preferably, reaction of the polyisocyanate with the blocking agent is carried out by cooling the reactants to 40 to 50°C while dropping the blocking agent under stirring in the presence of an optional curing catalyst (e.g. a tin-based catalyst).

The polyisocyanate is not particularly limited as long as it has two or more isocyanate groups on average in one molecule. Specific examples thereof may include polyisocyanates which can be used in preparation of the blocked isocyanate curing agent.

Examples of the suitable blocking agent for preparing the half-blocked isocyanate include lower aliphatic alkyl monoalcohols having 4 to 20 carbon atoms. Specific examples thereof include butyl alcohol, amyl alcohol, hexyl alcohol, 2-ethylhexyl alcohol and heptyl alcohol.

The reaction of the epoxy resin with the half-blocked isocyanate is carried out preferably by keeping the reactants at 140°C for about 1 hour.

As the tertiary amine, one having 1 to 6 carbon atoms can be preferably used. Specific examples of the tertiary amine include dimethylethanolamine, trimethylamine, triethylamine, dimethylbenzylamine, diethylbenzylamine, N, N-dimethylcyclohexylamine, tri-n-butylamine, diphenethylmethylamine, dimethylaniline and N- methyl morpholine.

The neutralizing acid to be mixed with the tertiary amine is not particularly limited, and specific examples thereof include inorganic and organic acids such as hydrochloric acid, nitric acid, phosphoric acid, formic acid, acetic acid and lactic acid. The neutralizing acid may more preferably be at least one acid selected from the group consisting of formic acid, acetic acid and lactic acid. The reaction of the thus-obtained neutralizing acid salt of a tertiary amine with the epoxy resin can be carried out by a usual method. For example, the epoxy resin is dissolved in a solvent such as ethylene glycol monobutyl ether, the resulting solution is heated to 60 to 100°C, a neutralizing acid salt of a tertiary amine is dropped thereto, and the reaction mixture is held at 60 to 100°C until an acid value of 1 is attained.

Preferably, the amine-modified epoxy resin having a hydroxyl value of 20 to 120 mg KOH/g has an epoxy equivalent of 1000 to 1800. The epoxy equivalent is more preferably 1200 to 1700. In addition, it may be preferable that the amine-modified epoxy resin (d1) having a hydroxyl value of 20 to 120 mg KOH/g has a number average molecular weight of 1500 to 2700.

The amount (milligram equivalent) of quaternary ammonium groups in the amine-modified epoxy resin (d1) having a hydroxyl value of 20 to 120 mg KOH/g may preferably be 35 to 70 meq per 100 g, more preferably 35 to 55 meq per 100 g. When the amount of quaternary ammonium groups is in the above-mentioned range, there is an advantage that pigment dispersion performance is improved, and the coating performance of the electrodeposition coating composition is improved.

An amount of the pigment dispersion resin (D) is such that a ratio (solid content mass ratio) of the pigment (E) and the pigment dispersion resin (D), which are contained in the pigment dispersion paste, may preferably be in a range of 1/0.1 to 1/1.5, more preferably in a range of 1/0.1 to 1/1.1 in terms of a ratio of pigment (E)/pigment dispersion resin (D). When the amount of the pigment dispersion resin (D) is above the above-mentioned range, curing performance may be deteriorated. In addition, when the amount of the pigment dispersion resin (D) is below the above-mentioned range, defective pigment dispersion may occur.

### Pigment (E)

As a pigment (E), a pigment that is usually used in an electrodeposition coating composition can be used. Examples of the pigment include inorganic pigments and organic pigments that are usually used, for example, coloring pigments such as titanium white (titanium dioxide), carbon black and red iron oxide; extender pigments such as kaolin, talc, aluminum silicate, calcium carbonate, mica and clay; and anticorrosive pigments such as iron phosphate, aluminum phosphate, calcium phosphate, aluminum tripolyphosphate, aluminum phosphomolybdate and aluminum zinc phosphomolybdate.

Preferably, the pigment (E) may be used in an amount of 1 to 30% by mass based on the resin solid content of the cationic electrodeposition coating composition.

### Organic acid (F)

In the present invention, it may be more preferable to use an organic acid (F) in the preparation of the pigment dispersion paste.
In the case of using the organic acid (F) in the present invention, the metal compound (C) and the organic acid (F) are previously mixed to prepare a mixture.
By premixing the metal compound (C) and the organic acid (F), the solubility / dispersibility of the metal compound (C) can be improved, whereby the catalytic activity can be improved and, there is an advantage that a coating film excellent in curability and corrosion resistance can be formed.

The organic acid (F) is, for example, at least one compound selected from the group consisting of a hydroxymonocarboxylic acid and a sulfonic acid. Examples of the hydroxycarboxylic acid include the following compounds:
- monohydroxymonocarboxylic acids, particularly aliphatic monohydroxymonocarboxylic acids, which have total 2 to 5, preferably 2 to 4 carbon atoms, such as lactic acid and glycolic acid; and
- dihydroxy monocarboxylic acids, particularly aliphatic dihydroxy monocarboxylic acids, which have total 3 to 7, preferably 3 to 6 carbon atoms, such as dimethylol propionic acid (DMPA) and glyceric acid.

The sulfonic acid is an organic sulfonic acid, and examples thereof include alkanesulfonic acids having total 1 to 5, preferably 1 to 3 carbon atoms, such as methanesulfonic acid and ethanesulfonic acid.

More preferably, at least one selected from the group consisting of lactic acid, dimethylolpropionic acid and methanesulfonic acid may be used as the organic acid (F).

Using form of the organic acid (F) is not particularly limited, and examples thereof include a solid form, a liquid form, a solution form with the organic acid (F) dissolved in a solvent (particularly an aqueous solution form). Preferably, the organic acid (F) may be used in the form of an aqueous solution. Examples of the solvent that can be used for preparation of an aqueous solution of the organic acid (F) include water such as ion-exchanged water, purified water and distilled water, and aqueous solvents containing water as a main component. The aqueous solvent may contain an optional organic solvent (e.g. a water-soluble or water-miscible organic solvent such as an alcohol, an ester or a ketone) in addition to water.

In case that the electrodeposition coating composition according to the present invention contains the organic acid (F), a ratio of the number of moles of the metal in the metal compound (C) to the number of moles of the organic acid (F) ((C) : (F)) may preferably be in a range of 1 : 0.3 to 1 : 2.7. The metal element contained in the metal compound (C) in the present invention is at least one element selected from the group consisting of La, Nd, Y, Pr, Yb and Ce that are rare earth elements, each of which forms a trivalent cation. The organic acid (F) that is at least one compound selected from the group consisting of a hydroxymonocarboxylic acid and a sulfonic acid is a monovalent acid. Thus, when the ratio of the number of moles of the metal element to the number of moles of the organic acid (F) ((C) : (F)) is in a range of 1 : 0.3 to 1 : 2.7, the total valence of cations from the organic acid (D) (the number of moles of the organic acid (D)) is below the total valence of anions from the metal element (i.e. (number of moles of metal element) × 3). By using the metal compound (C) and the organic acid (F) at the above-mentioned ratio, an electrodeposition coating composition can be prepared which provides a cured coating film having excellent edge portion rust prevention property and an excellent coating film appearance.

When the resin emulsion (i) contains the metal compound (C) and the organic acid (F) in the above-mentioned ratio in terms of the number of moles in the electrodeposition coating composition of the present invention, excellent edge portion rust prevention property can be attained without deteriorating the coating film appearance of the electrodeposition coating film.
Details of this mechanism are not necessarily clear, and are not bound by a theory, but it is considered that when the total valence of cations from the organic acid (F) (the number of moles of the organic acid (F)) is below the total valence of anions from the metal element of the component (C) (i.e. (number of moles of metal element) × 3), the electric conductivity of the electrodeposition coating composition is kept within an appropriate range even when the electrodeposition coating composition contains the metal compound (C) and the organic acid (F). Accordingly, it is considered that the component (F) is deposited to the extent that sufficient rust prevention performance can be secured for an object to be coated, particularly an edge portion without deteriorating the coating film appearance of the resulting cured electrodeposition coating film, so that excellent edge portion rust prevention property can be attained. On the other hand, for example, when a metal salt compound (e.g. lanthanum nitrate) of the metal element in the component (C) is used, the metal salt compound is ionized in the electrodeposition coating composition, resulting in an increase in electric conductivity of the electrodeposition coating composition. Accordingly, coating film defects such as gas pinholes easily occur during electrodeposition coating, leading to deterioration of the coating film appearance of the resulting cured electrodeposition coating film.

A ratio of the number of moles ((C) : (F)) may more preferably be in a range of 1 : 0.5 to 1 : 2.4, still more preferably in a range of 1 : 0.9 to 1 : 2.1. When the molar ratio of the content of the organic acid (F) is less than 0.3 in the ratio of the number of moles, the metal compound (C) may be not sufficiently dissolved, and thus edge portion rust prevention property may be deteriorated. Further, the storage stability of the electrodeposition coating composition and the pigment dispersion paste may be deteriorated. On the other hand, when the molar ratio of the content of the organic acid (F) is more than 2.7, the resulting electrodeposition coating composition may have a high electric conductivity, and occurrence of coating film appearance defects such as generation of gas pinholes during electrodeposition coating may be occurred.

### Sequestrant (G)

In a preferred embodiment of the invention, a sequestrant (G) may preferably be used in a preparation of the pigment dispersion paste. The sequestrant (G) contains one or more selected from the group consisting of an amine-modified epoxy resin (G-1) having a hydroxyl value of 150 to 650 mg KOH/g and an amine value of 30 to 190 mg KOH/g and a polyvalent acid (G-2). As the sequestrant (G), either the compound (G-1) or the compound (G-2) may be used, or both of them may be used. In the present invention, both of the compound (G-1) and the compound (G-2) may preferably be used as the sequestrant (G).

### Amine-modified epoxy resin (G-1)

The amine-modified epoxy resin (G-1) having a hydroxyl value of 150 to 650 mg KOH/g and an amine value of 30 to 190 mg KOH/g can be prepared by reacting an amine compound with an oxirane ring in an epoxy resin skeleton to perform modification. The amine-modified epoxy resin (G-1) can be prepared in the same manner as in the case of the amine-modified epoxy resin of the aminated resin (A). As the amine-modified epoxy resin (G-1), the amine-modified epoxy resin in the aminated resin (A) may be used as it is. In the present invention, the same resin or different resins may be used as the amine-modified epoxy resin (G-1) and the amine-modified epoxy resin in the aminated resin (A).

Preferably, the amines to be reacted with the oxirane ring of the epoxy resin in preparation of the amine-modified epoxy resin (G-1) having a hydroxyl value of 150 to 650 mg KOH/g and an amine value of 30 to 190 mg KOH/g include 50 to 95% by mass of the secondary amine, 0 to 30% by mass of the secondary amine having a blocked primary amine, and 0 to 20% by mass of the primary amine.

In the amine-modified epoxy resin (G-1), when the hydroxyl value is 150 to 650 mg KOH/g and the amine value is 30 to 190 mg KOH/g, sequestration (sealing) property is satisfactorily obtained, which provides improved dispersion stability of a resulting pigment dispersion paste. Therefore, there is an advantage that an electrodeposition coating composition having excellent storage stability and edge portion rust prevention property can be obtained.

A number average molecular weight of the amine-modified epoxy resin (G-1) having a hydroxyl value of 150 to 650 mg KOH/g and an amine value of 30 to 190 mg KOH/g may preferably be in a range of 1,000 to 5,000. It may be preferable the number average molecular weight is in the above-mentioned range because favorable pigment dispersion stability can be attained. The number average molecular weight of the amine-modified epoxy resin (d2) may more preferably be in a range of 2,000 to 3,500. When the number average molecular weight of the amine-modified epoxy resin (G-1) is 1,000 or more, physical properties, such as solvent resistance and corrosion resistance, of the resulting cured electrodeposition coating film are improved. In addition, when the number average molecular weight of the amine-modified epoxy resin (G-1) is 5,000 or less, the dispersibility and dispersion stability of the resulting pigment dispersion paste are improved.

The amine-modified epoxy resin (G-1) having a hydroxyl value of 150 to 650 mg KOH/g and an amine value of 30 to 190 mg KOH/g may preferably have a base milligram equivalent (MEQ (B)) of 50 to 350 based on 100 g of the resin solid content. When the MEQ (B) of the amine-modified epoxy resin (d2) is not in the above-mentioned range, particularly when the MEQ (B) is less than 50, the pigment dispersion paste (ii) may have poor storage stability. The base milligram equivalent (MEQ (B)) of the amine-modified epoxy resin (G-1) based on 100 g of the solid content can be adjusted by the type and amount of the amine compound that is reacted in preparation of the amine-modified epoxy resin (G-1).

Here, the MEQ (B) stands for mg equivalent (base), which refers to a mg equivalent of a base per 100 g of a resin solid content. The MEQ (B) can be measured in the following manner: about 10 g of the solid content of the electrodeposition coating composition is precisely weighed, and dissolved in about 50 ml of a solvent (THF: tetrahydrofuran), 7.5 ml of acetic anhydride and 2.5 ml of acetic acid are then added, and potentiometric titration is performed with a 0.1 N perchloric acid-acetic acid solution using an automatic potentiometric titrator (e.g. APB-410 manufactured by KYOTO ELECTRONICS MANUFACTURING CO., LTD.), whereby the amount of a base contained in the amine-modified epoxy resin (G-1) is quantitatively determined.

In the present invention, it may be preferable that the amine-modified epoxy resin (G-1) having a hydroxyl value of 150 to 650 mg KOH/g and an amine value of 30 to 190 mg KOH/g to be used in preparation of the pigment dispersion paste is prepared in the form of a resin emulsion. As one aspect of a method for preparing a resin emulsion, mention is made of a method in which a resin emulsion is prepared in the same manner as in the case of the resin emulsion (i). Specifically, the amine-modified epoxy resin (G-1) and the blocked isocyanate curing agent (B) are each dissolved in an organic solvent to prepare solutions, these solutions are mixed, and the mixture is then dispersed in water using a neutralizing acid, whereby an amine-modified epoxy resin emulsion can be prepared. As another aspect of a method for preparing a resin emulsion, the amine-modified epoxy resin (G-1) is dissolved in an organic solvent to prepare a solution, and the solution is dispersed in water using a neutralizing acid, whereby an amine-modified epoxy resin emulsion can be prepared. Examples of the neutralizing acid that can be used for preparation of the resin emulsion include organic acids such as methanesulfonic acid, sulfamic acid, lactic acid, dimethylolpropionic acid, formic acid and acetic acid. It may be more preferable to use at least one selected from the group consisting of formic acid, acetic acid and lactic acid as the neutralizing acid.

An amount of the amine-modified epoxy resin (G-1) contained in the pigment dispersion paste in the case of using the amine-modified epoxy resin (G-1) as the sequestrant (G) may preferably be 0.02 to 3 parts by mass, more preferably 0.03 to 1 part by mass, even more preferably 0.06 to 0.4 parts by mass, in terms of a resin solid content of the amine-modified epoxy resin (G-1), based on 100 part by mass of a resin solid content of the pigment dispersion paste (D).
When the amount of the amine-modified epoxy resin (G-1) is less than 0.02 part by mass, effect as the sequestrant (G) may not be obtained.
When the amount of the amine-modified epoxy resin (G-1) exceeds 3 parts by mass, the curability may decrease.

### Polyvalent acid (G-2)

In this specification, the "polyvalent acid" refers to a compound having two or more monovalent acid groups, or a compound having a di-or-more-valent acid group. The polyvalent acid (G-2) may preferably be at least one selected from the group consisting of a compound having two or more carboxylic acid groups and a compound having a phosphoric acid group. Specific examples of the polyvalent acid (G-2) include:
compounds having 2 to 6 carbon atoms and having two or more carboxylic acid groups, such as tartaric acid, glutamic acid, citric acid, malic acid, hydroxymalonic acid, malonic acid, succinic acid, glutaric acid and adipic acid;
polymers having two or more carboxylic acid groups, such as polyacrylic acid; and
compounds having a phosphoric acid group, such as phosphoric acid and condensed phosphoric acid (e.g. diphosphoric acid, triphosphoric acid, polyphosphoric acid and cyclophosphoric acid etc.).

In this specification, the condensed phosphoric acid means an inorganic compound having two or more phosphoric acid groups. The condensed phosphoric acid can be prepared by, for example, a dehydration reaction of orthophosphoric acid (H₃PO₄) or a reaction similar thereto.

The polyvalent acid (G-2) may preferably be at least one selected from the group consisting of tartaric acid, citric acid, phosphoric acid, condensed phosphoric acid, malic acid and polyacrylic acid, more preferably at least one selected from the group consisting of tartaric acid, citric acid and malic acid.

An amount of the polyvalent acid (G-2) contained in the pigment dispersion paste may preferably be from 0.01 to 10 parts by mass, more preferably 0.08 to 5 parts by mass, still more preferably 0.09 to 3.5 parts by mass, based on 100 parts by mass of the resin solid content of the pigment dispersion resin (D).
When the amount of the polyvalent acid (G-2) is less than 0.01 parts by mass, technical effect of a sequestrant may not be deteriorated.
When the amount of the polyvalent acid (G-2) is more than 10 parts by mass, curability may be deteriorated.

In one preferred embodiment of preparing the pigment dispersion paste according to the present invention,
using the sequestrant (G) containing one or more selected from the group consisting of the amine-modified epoxy resin (G-1) having a hydroxyl value of 150 to 650 mg KOH/g and an amine value of 30 to 190 mg KOH/g and the polyvalent acid (G-2), and
the preparation of the pigment dispersion paste including mixing the metal compound (C) and the organic acid (F), and mixing the resultant mixture, the pigment dispersion resin (D) and the sequestrant (G), and mixing the pigment (E)
can provide improved dispersion stability of the resulting pigment dispersion paste, whereby an electrodeposition coating composition excellent in storage stability and curability can be obtained.
This seems to be due to a mechanism for strengthening the coating performance of the pigment dispersion resin (D) covering at least a part of the metal compound (C) by the sequestant (G).
Details of this mechanism are not necessarily clear, and are not bound by a theory, but can be considered as follows.

It can be considered that in the pre-mixing of the metal compound (C) and the organic acid (F), a part of the metal compound (C) is dissolved with the organic acid, and a part of the metal compound (C) is dispersed (e.g. dispersed like a chelate) together with the organic acid (F), so that the metal compound (C) is finely dispersed. Here, by mixing the metal compound (C) and the pigment dispersion resin (D), at least a part of the metal compound (C) is covered with the pigment dispersion resin (D), so that the dispersion stability of the metal compound (C) is slightly improved.
However, it is considered that the covering state of the metal compound (C) at this stage is not sufficient, and when the pigment (E) is added, the pigment (E) and the metal compound (C) may react with each other, leading to collapse of the covering state.
Thus, use of the sequestrant (G) in combination with the pigment dispersion resin (D) can cause the pigment dispersion resin (D) to be self-aggregated, leading to consolidation of covering of the pigment dispersion resin (D) and the metal compound (C) which has been moderate.
Since the self-aggregation force is strong, there is an advantage that by using the sequestrant (G) in combination with the pigment dispersion resin (D), favorable dispersion stability can be attained even when the amount of the pigment dispersion resin (D) is reduced.
From the above reasons, the sequestrant (G) in the present specification means a component having the action of strengthening the coating performance of the pigment dispersion resin (D) covering at least a part of the metal compound (C).

### Preparation of pigment dispersion paste

In the embodiment 1 according to the present invention, the pigment dispersion paste is prepared by the step of;
mixing the metal compound (C) and the pigment dispersion resin (D), and
mixing the resultant mixture, the pigment dispersion resin (D) and the pigment (E).

In this embodiment, first, the metal compound (C) and a pigment dispersion resin (D) (i.e., a part of the pigment dispersion resin (D) contained in the electrodeposition coating composition) are mixed. Then, to the resultant mixture, a pigment dispersion resin (D) (i.e., a residue of the pigment dispersion resin (D) contained in the electrodeposition coating composition) and the pigment (E) are mixed.

Conditions such as a temperature and a stirring rate in the mixing of the metal compound (C) and the pigment dispersion resin (D) may be conditions that are usually employed in production of the coating composition. For example, mixing can be performed at a temperature of 10 to 50°C, preferably 20 to 40°C at such a stirring rate that a stirring flow capable of dispersing the above components is generated. The stirring time can be arbitrarily selected depending on the scale of a reaction system, a stirrer and so on. The stirring time may be, for example, 5 minutes to 2 hour.

Thus-obtained mixture, the pigment dispersion resin (D) and the pigment (E) are mixed. Mixing procedure of the pigment dispersion resin (D) and the pigment (E) may be any methods. For example, it may be a mixing procedure that the residue of the pigment dispersion resin (D) and pigment (E) are mixed beforehand, next, the resultant mixture and the above-obtained mixture are mixed. Such mixing provides the pigment dispersion paste. Conditions such as a temperature and a stirring rate in the mixing may be conditions that are usually employed in production of the coating composition. For example, mixing can be performed at 10 to 50°C, preferably 20 to 40°C at such a stirring rate that a stirring flow capable of dispersing the pigment is generated. For example, the stirring time may preferably be such that stirring is performed until the pigment has a dispersion grain size of 10 µm or less. Here, the dispersion grain size of the pigment can be determined by measuring the volume average particle size of the pigment.

In the embodiment 2 according to the present invention, the pigment dispersion paste is prepared by the step of;
mixing the metal compound (C), the pigment dispersion resin (D) and the sequestrant (G), and
mixing the resultant mixture, the pigment dispersion resin (D) and the pigment (E).

In this embodiment, first, the metal compound (C), a pigment dispersion resin (D) (i.e., a part of the pigment dispersion resin (D) contained in the electrodeposition coating composition) and the sequestrant (G) are mixed. In this mixing, the sequestrant (G) may preferably be added after the metal compound (C) and the pigment dispersion resin (D) are formerly mixed. Then, to the resultant mixture, a pigment dispersion resin (D) (i.e., a residue of the pigment dispersion resin (D) contained in the electrodeposition coating composition) and the pigment (E) are mixed. Mixing procedure of the pigment dispersion resin (D) and the pigment (E) to the resultant mixture may be any methods. For example, it may be a mixing procedure that the residue of the pigment dispersion resin (D) and pigment (E) are mixed beforehand, next, the resultant mixture and the above-obtained mixture are mixed.

Conditions such as a temperature and a stirring rate in the embodiment may be conditions that are usually employed in production of the coating composition. More specifically, the conditions may be the same as those of the embodiment 1 described above.

In the embodiment 3 according to the present invention, the pigment dispersion paste is prepared by the step of; mixing the metal compound (C) and the organic acid (F), and mixing the resultant mixture, the pigment dispersion resin (D) and the sequestrant (G), and mixing the pigment (E).

The metal compound (C) and the organic acid (F) are mixed beforehand prior to other components, to prepate a mixture. By mixing the metal compound (C) and the organic acid (F) beforehand to prepare the mixture, the solubility/dispersibility of the metal compound (C) is improved, and thus catalytic activity is improved, so that a coating film excellent in curability and corrosion resistance can be formed.

Mixing of the metal compound (C) and the organic acid (F) can be performed by, for example, dispersing particles of the metal compound (C) in an aqueous solution of the organic acid (F), which is obtained by mixing the organic acid (F) and the solvent (particularly an aqueous solvent), by stirring. Conditions such as a temperature and a stirring rate in mixing may be conditions that are usually employed in production of the coating composition. For example, mixing can be performed at 10 to 30°C, preferably at room temperature at such a stirring rate that a stirring flow is generated. The stirring time can be appropriately selected according to the scale of a reaction system. For example, the stirring time can be selected within a range of 0.1 to 24 hours.

A dispersion liquid is prepared by mixing the thus-obtained mixture with the pigment dispersion resin (D) and the sequestrant (G). The order in which the mixture liquid (C), the pigment dispersion resin (D) and the sequestrant (G) are mixed may be arbitrary. For example, the obtained mixture and the components (D) and (G) may be simultaneously added and mixed,
the obtained mixture and component (D) may be mixed, followed by adding the component (G), or
the obtained mixture and the components (G) may be mixed, followed by adding the component (D).
Conditions such as a temperature and a stirring rate in the mixing may be conditions that are usually employed in production of the coating composition. For example, mixing can be performed at 10 to 50°C, preferably 20 to 40°C at such a stirring rate that a stirring flow capable of dispersing the obtained mixture, components (D) and (G) is generated. The stirring time can be arbitrarily selected depending on the scale of a reaction system, a stirrer and so on. The stirring time may be, for example, 5 minutes to 1 hour.

With respect to an amount of the pigment dispersion resin (D), a ratio of the pigment (E) to the pigment dispersion resin (D) ((E) / (D)) in terms of a solid mass ratio may preferably be in a range of 1 / 0.1 to 1 / 1.5, more preferably in a range of 1 / 0.1 to 1 / 1.1 in terms of a ratio of pigment (E) / pigment dispersion resin (D). When the amount of the pigment dispersion resin (D) is above the above-mentioned range, curing performance may be deteriorated. In addition, when the amount of the pigment dispersion resin (D) is below the above-mentioned range, defective pigment dispersion may occur.

The pigment dispersion paste is prepared by; mixing the metal compound (C) and the organic acid (F); mixing the resultant mixture, the pigment dispersion resin (D) and the sequestrant (G), and; mixing the pigment (E). Conditions such as a temperature and a stirring rate in the mixing may be conditions that are usually employed in production of the coating composition. For example, mixing can be performed at 10 to 50°C, preferably 20 to 40°C at such a stirring rate that a stirring flow capable of dispersing the pigment is generated. For example, the stirring time may preferably be such that stirring is performed until the pigment has a dispersion grain size of 10 µm or less. Here, the dispersion grain size of the pigment can be determined by measuring the volume average particle size of the pigment.

The electrodeposition coating composition prepared by the method according to the present invention may preferably contain a bismuth compound (H). The bismuth compound (H) can provide good curability to an electrodeposition coating composition. Containing the bismuth compound (H) in the electrodeposition coating composition makes it unnecessary to use a lead compound, organotin compound, or the like as a curing catalyst. Accordingly, an electrodeposition coating composition which does not substantially contain any of a tin compound and a lead compound can be prepared.

As an embodiment of a method of including the bismuth compound (H) in the electrodeposition coating composition, for example, there is a method of dispersing the bismuth compound (H) with the pigment (E) in the preparation of the pigment dispersion paste. In this embodiment, it may be preferable that the bismuth compound (H) and an acid component such as the organic acid are previously mixed and dispersed. For example, in the above embodiments 1 and 2, the bismuth compound (H) can be included in the electrodeposition coating composition according to the above procedure.

Another embodiment of the method of including the bismuth compound (H) in the electrodeposition coating composition includes, for example, a method in which the bismuth compound (H) is also mixed at the time of mixing the metal compound (C). For example, in the above embodiment 3, the bismuth compound (H) can be included in the electrodeposition coating composition according to the above procedure.
More specifically, addition of the bismuth compound (H) in an electrodeposition coating composition can be performed by the following procedure:
preliminarily mixing of the bismuth compound (H) and the organic acid to sufficiently disperse the bismuth compound;
mixing the metal compound (C) and the organic acid (F) thereto;
mixing the pigment dispersion resin (D) and the sequestrant (G) to the resultant mixture; and the
   mixing the pigment (E) thereto to obtain a pigment dispersion paste.

### Preparation of the electrodeposition coating composition

The electrodeposition coating composition according to the present invention can be prepared by mixing the resin emulsion (i) and the pigment dispersion paste. A mixing ratio of the resin emulsion (i) and the pigment dispersion paste (the resin emulsion (i) : pigment dispersion paste) may preferably be in a range of 1 : 0.1 to 1 : 0.4, more preferably in a range of 1 : 0.15 to 1 : 0.3 in terms of a solid content mass ratio.

A solid content of the electrodeposition coating composition in the present invention may preferably be 1 to 30% by mass based on the total amount of the electrodeposition coating composition. When the solid content of the electrodeposition coating composition is less than 1% by mass, a deposition amount of the electrodeposition coating' film decreases, so that it may be difficult to secure sufficient corrosion resistance. When the resin solid content of the electrodeposition coating composition is more than 30% by mass, throwing power or coating appearance may be deteriorated.

A pH of the electrodeposition coating composition in the present invention may preferably be 4.5 to 7. When the pH of the electrodeposition coating composition is less than 4.5, the electrodeposition coating composition may have poor corrosion resistance, and there may be the problem that a sludge is generated in electrodeposition coating. The pH of the electrodeposition coating composition can be set within the above-mentioned range by adjusting the amount of a neutralizing acid to be used, the addition amount of a free acid added, and so on.

The pH of the electrodeposition coating composition can be measured using a commercially available pH meter having a temperature compensation function.

A milligram equivalent (MEQ (A)) of the acid based on 100 g of the solid content of the electrodeposition coating composition may preferably be 40 to 120. The milligram equivalent (MEQ (A)) of the acid based on 100 g of the resin solid content of the electrodeposition coating composition can be adjusted by an amount of the neutralized acid and an amount of a free acid.

Here, the MEQ (A) stands for mg equivalent (acid), which is the sum of mg equivalents of all acids per 100 g of the solid content of the coating composition. The MEQ (A) can be measured in the following manner: about 10 g of the solid content of the electrodeposition coating composition is precisely weighed, and dissolved in about 50 ml of a solvent (THF: tetrahydrofuran), and potentiometric titration is then performed with a 1/10 N NaOH solution to quantitatively determine the amount of an acid contained in the electrodeposition coating composition.

The electrodeposition coating composition in the present invention may contain additives that are commonly used in the field of coating materials, for example an organic solvent such as ethylene glycol monobutyl ether, ethylene glycol monohexyl ether, ethylene glycol monoethylhexyl ether, propylene glycol monobutyl ether, dipropylene glycol monobutyl ether or propylene glycol monophenyl ether, an antidrying agent, a surfactants such as an antifoaming agent, a viscosity modifier such as acrylic resin fine particles, a cissing inhibitor, an inorganic anticorrosive agent such as a vanadium salt, copper, iron, manganese, magnesium or a calcium salt, and the like as necessary. In addition to the above-mentioned additives, a known auxiliary complexing agent, a buffer, a smoothing agent, a stress relaxation agent, a brightener, a semi-brightener, an antioxidant, an ultraviolet absorber and the like may be blended according to a purpose. These additives may be mixed during preparation of the resin emulsion (i), mixed during preparation of the pigment dispersion paste, or mixed during or after mixing of the resin emulsion (i) and the pigment dispersion paste.

The electrodeposition coating composition in the present invention may contain other coating film-forming resin components in addition to the aminated resin (A). Examples of other coating film-forming resin components include acrylic resins, polyester resins, urethane resins, butadiene resins, phenol resins and xylene resins. Other coating film-forming resin components may be an aminated resin which does not correspond to the above-described aminated resin (A). Phenol resins and xylene resins may be preferable as other coating film-forming resin components that may be contained in the electrodeposition coating composition. Examples of the phenol resin or xylene resin include xylene resins having 2 or more and 10 or less aromatic rings.

### Electrodeposition coating and formation of electrodeposition coating film

An object to be coated can be subjected to electrodeposition coating and formation of an electrodeposition coating film using the electrodeposition coating composition according to the present invention.

In electrodeposition coating using the electrodeposition coating composition according to the present invention, an object to be coated is set to a cathode, and a voltage is applied between the cathode and an anode. Accordingly, an electrodeposition coating film is deposited on the object to be coated.

In an electrodeposition coating step, an object to be coated is immersed in the electrodeposition coating composition, and a voltage of 50 to 450 V is then applied to perform electrodeposition coating. When the applied voltage is less than 50 V, electrodeposition may be insufficient, and when the applied voltage is more than 450 V, the coating film may be broken, leading to an abnormal appearance. During electrodeposition coating, the bath liquid temperature of the coating composition is usually adjusted to 10 to 45°C.

The time for applying the voltage varies depending on electrodeposition conditions, but may be generally 2 to 5 minutes.

A thickness of the electrodeposition coating film is such that a thickness of the electrodeposition coating film finally obtained by heating and curing may preferably be 5 to 40 µm, more preferably 10 to 25 µm. When the thickness of the electrodeposition coating film is less than 5 µm, corrosion resistance may be insufficient. On the other hand, when the thickness of the electrodeposition coating film is more than 40 µm, the coating material may be wasted.

After completion of the electrodeposition process, the electrodeposition coating film obtained as described above is heated at 120 to 260°C, preferably 140 to 220°C, for 10 to 30 minutes as it is or after being rinsed, whereby a heated and cured electrodeposition coating film is formed.

As an object to be coated with the electrodeposition coating composition in the present invention, it is possible to use various materials which can be fed with electricity. Examples of the usable object to be coated include cold-rolled steel sheets, hot-rolled steel sheets, stainless steels, electrogalvanized steel sheets, hot-dip galvanized steel sheets, zinc-aluminum alloy-based plated steel sheets, zinc-iron alloy-based plated steel sheets, zinc-magnesium alloy-based plated steel sheets, zinc-aluminum-magnesium alloy-based plated steel sheets, aluminum-based plated steel sheets, aluminum-silicon alloy-based steel sheets and tin-based plated steel sheets.

### EXAMPLES

The present invention will be described more in detail by way of the following examples, but the present invention is not limited to these examples. In examples, "parts" and "%" are on a mass basis unless otherwise specified.

### Production Example 1 Production of pigment dispersion resin (D)

### Preparation of 2-ethylhexanol half-blocked isophorone diisocyanate

222.0 parts of isophorone diisocyanate (hereinafter, abbreviated as IPDI) was added in a reaction vessel equipped with a stirrer, a condenser tube, a nitrogen inlet tube and a thermometer, and was diluted with 39.1 parts of methyl isobutyl ketone (MIBK), and 0.2 parts of dibutyltin dilaurate was added thereto. Thereafter, the mixture was heated to 50°C, and 131.5 parts of 2-ethylhexanol was then added dropwise under stirring in a dry nitrogen atmosphere over 2 hours to obtain 2-ethylhexanol half-blocked IPDI (solid content: 90.0% by mass).

### Preparation of quaternization agent

87.2 parts of dimethylethanolamine, 117.6 parts of a 75% lactic acid aqueous solution and 39.2 parts of ethylene glycol mono-n-butyl ether were sequentially added in a reaction vessel, and stirred at 65°C for 30 minutes to prepare a quaternization agent.

### Production of pigment dispersion resin

710.0 parts of a bisphenol A-type epoxy resin (trade name: DER-331 J, manufactured by The Dow Chemical Company) and 289.6 parts of bisphenol A were added in a reaction vessel, reacted in a nitrogen atmosphere at 150 to 160°C for 1 hour, and then cooled to 120°C, and 498.8 parts of the previously prepared 2-ethylhexanol half-blocked IPDI (MIBK solution) was then added. The reaction mixture was stirred at 110 to 120°C for 1 hour, 463.4 parts of ethylene glycol mono-n-butyl ether was added, the mixture was cooled to 85 to 95°C, and 196.7 parts of the previously prepared quaternization agent was added. The reaction mixture was held at 85 to 95°C until the acid value was 1, and 964 parts of deionized water was then added to obtain a desired pigment dispersion resin (solid content: 50% by mass). The hydroxyl value of the resulting pigment dispersion resin was 75 mg KOH/g.

### Production Example 2 Production of aminated resin (A-1)

92 parts of methyl isobutyl ketone, 940 parts of a bisphenol A-type epoxy resin (trade name: DER-331 J, manufactured by The Dow Chemical Company), 382 parts of bisphenol A, 63 parts of octylic acid and 2 parts of dimethylbenzylamine were added, and reacted until the epoxy equivalent was 1110 g/eq while the inside of a reaction vessel was held at a temperature of 140°C, and cooling was then performed until the temperature of the inside of the reaction vessel was 120°C. A mixture of 78 parts of diethylenetriamine diketimine (methyl isobutyl ketone solution having a solid content of 73%) and 92 parts of diethanolamine was then added, and reacted at 120°C for 1 hour to obtain an aminated resin (A-1) (cation-modified epoxy resin). The resin had a number average molecular weight of 2,560, an amine value (milligram equivalent of a base based on 100 g of the resin solid content: MEQ (B)) of 50 mg KOH/g (where the amine value derived from the primary amine was 14 mg KOH/g), and a hydroxyl value of 240 mg KOH/g.

### Production Example 3-1 Production of blocked isocyanate curing agent (B-1)

1680 parts of hexamethylene diisocyanate (HDI) and 732 parts of MIBK were added in a reaction vessel, and heated to 60°C. A solution of 346 parts of trimethylolpropane in 1067 parts of MEK oxime was added thereto in dropwise at 60°C over 2 hours. Further, the mixture was heated at 75°C for 4 hours, disappearance of an absorption based on an isocyanate group was then confirmed in IR spectrum measurement. The mixture was allowed to cool, and 27 parts of MIBK was then added to obtain a blocked isocyanate curing agent (B-1) having a solid content of 78%. The isocyanate group value was 252 mg KOH/g.

### Production Example 3-2 Production of blocked isocyanate curing agent (B-2)

1340 parts of 4,4'-diphenylmethane diisocyanate and 277 parts of MIBK were added in a reaction vessel, and heated to 80°C, and a solution of 226 parts of ε-caprolactam in 944 parts of butyl cellosolve was then added dropwise at 80°C for 2 hours. Further, the mixture was heated at 100°C for 4 hours, disappearance of an absorption based on an isocyanate group was then confirmed in IR spectrum measurement, the mixture was allowed to cool, and 349 parts of MIBK was then added to obtain a blocked isocyanate curing agent (B-2) (solid content: 80%). The isocyanate group value was 251 mg KOH/g.

### Production Example 4 Production of emulsion (1) of amine-modified epoxy resin

350 parts (solid content) of the aminated resin (A-1) obtained in Production Example 2 was mixed with 75 parts (solid content) of the blocked isocyanate curing agent (B-1) obtained in Production Example 3-1 and 75 parts (solid content) of the blocked isocyanate curing agent (B-2) obtained in Production Example 3-2, and ethylene glycol mono-2-ethylhexyl ether was added in an amount of 3% (15 parts) based on the solid content. Next, the mixture was neutralized by adding formic acid in such a manner that the addition amount corresponded to a resin neutralization ratio of 40%, the mixture was slowly diluted by adding ion-exchanged water, and methyl isobutyl ketone was then removed under a reduced pressure so that the solid content was 40%, thereby obtaining a emulsion (1) of an amine-modified epoxy resin.

### Example 1

### Production of pigment dispersion paste

To 116.6 parts of ion exchanged water, 60.0 parts by mass of the pigment dispersion resin (D) (solid content: 50% by mass) obtained in Production Example 1 and 100 parts of lanthanum oxide were added, then, the resultants was stirred and mixed, and stirred with a sand mill for 1 hour at 2000 rpm in a temperature of 40 °C to obtain a lanthanum oxide paste. The obtained lanthanum oxide paste had a solid content concentration of 47% by mass.

In another vessel, 5.1 parts of a 50% lactic acid aqueous solution and 6.5 parts of bismuth oxide were added, and stirred and mixed in 110.1 parts of ion-exchanged water. Here, 56.7 parts by mass of the pigment dispersion resin (D) obtained in Production Example 1 was added thereto, and the mixture was stirred at 1000 rpm for 1 hour at room temperature.

7.1 parts of the emulsion of the amine-modified epoxy resin obtained in Production Example 4 and 1.4 parts of a 10% tartaric acid aqueous solution were added thereto, and stirred, then, 1 part of carbon, 40 parts of titanium oxide, 53.6 parts of Satintone (calcined kaolin) (these being a pigment) were added thereto, and stirred at 2000 rpm for 1 hour at 40 °C using a sand mill, to obtain a pigment paste having a solid content concentration of 47% by mass.

Next, 4.5 parts of lanthanum oxide paste obtained above and 82.8 parts of pigment paste containing bismuth were mixed thereto and stirred, to obtain a pigment dispersed paste. The obtained pigment dispersion paste had a solid content concentration of 47% by mass.

### Production of electrodeposition coating composition

In a stainless steel vessel, 492.8 parts of ion-exchanged water, 375.1 parts of the emulsion (1) of the amine-modified epoxy resin prepared in Production Example 4 (which was used as a rein emulsion (i)), and 87.2 parts of the above pigment dispersion paste (ii) were added, and the mixture was then aged at 40°C for 16 hours to obtain an electrodeposition coating composition.

### Example 2

### Production of pigment dispersion paste

To 116.6 parts of ion exchanged water, 60.0 parts by mass of the pigment dispersion resin (D) (solid content: 50% by mass) obtained in Production Example 1 and 100 parts of neodymium oxide were added, and the mixture was stirred and mixed, and stirred with a sand mill for 1 hour at 2000 rpm in a temperature of 40 °C to obtain a neodymium oxide paste. The obtained neodymium oxide paste had a solid content concentration of 47% by mass.

Next, 4.2 parts of the neodymium oxide paste obtained as described above and 82.8 parts of the pigment paste containing bismuth obtained in Example 1 were mixed and stirred to obtain a pigment dispersion paste. The obtained pigment dispersion paste had a solid content concentration of 47% by mass.

### Production of electrodeposition coating composition

In a stainless steel vessel, 492.8 parts of ion-exchanged water, 375.1 parts of the emulsion (1) of the amine-modified epoxy resin prepared in Production Example 4 (which was used as a rein emulsion (i)), and 87.2 parts of the above pigment dispersion paste (ii) were added, and the mixture was then aged at 40°C for 16 hours to obtain an electrodeposition coating composition.

### Example 3

### Production of pigment dispersion paste

To 112.7 parts of ion-exchanged water, 60 parts by mass of the pigment dispersion resin (D) (solid content: 50% by mass) obtained in Production Example 1 was added, 100 parts of lanthanum oxide was then added, and mixed by stirring.

Next, 2.8 parts of a 10% tartaric acid aqueous solution and 7.5 parts of the emulsion (1) of the amine-modified epoxy resin obtained in Production Example 4 (in terms of resin solid content, which was used as an emulsion containing the amine modified epoxy resin (G-1)) were added thereto, and mixed and stirred with a sand mill at 2000 rpm for 1 hour at 40 °C to obtain a lanthanum oxide paste. The obtained lanthanum oxide paste had a solid content concentration of 47% by mass.

In another vessel, 5.3 parts of a 50% lactic acid aqueous solution and 6.9 parts of bismuth oxide were added, and stirred and mixed in 119.1 parts of ion exchanged water. Here, 56.7 parts of the pigment dispersion resin (D) obtained in Production Example 1 was added thereto, and the mixture was stirred at 1000 rpm for 1 hour at room temperature. Next, 7.5 parts of the emulsion of the amine-modified epoxy resin obtained in Production Example 4 and 1.4 parts of a 10% tartaric acid aqueous solution were added and stirred, and then 1 part of carbon, 40 parts of titanium oxide, 53.6 parts of Satintone (calcined kaolin) (these being a pigment) was added thereto, and stirred at 2000 rpm for 1 hour at 40 °C using a sand mill, to obtain a pigment paste having a solid content concentration of 47% by mass.

Next, 4.6 parts of the lanthanum oxide paste obtained above and 82.6 parts of pigment paste containing bismuth were mixed and stirred to obtain a pigment dispersed paste. The obtained pigment dispersion paste had a solid content concentration of 47% by mass.

### Production of electrodeposition coating composition

In a stainless steel vessel, 492.8 parts of ion-exchanged water, 375.1 parts of the emulsion (1) of the amine-modified epoxy resin prepared in Production Example 4 (which was used as a rein emulsion (i)), and 86.4 parts of the above pigment dispersion paste were added, and the mixture was then aged at 40°C for 16 hours to obtain an electrodeposition coating composition.

### Example 4

### Production of pigment dispersion paste

To 107.4 parts of ion exchanged water, 5.3 parts of 50% lactic acid aqueous solution (for bismuth mixing) and 6.9 parts of bismuth oxide were added, so that the solid concentration of the dispersed paste became 47% by mass, and was stirred at room temperature for 1 hour. 9.0 parts of a 50% lactic acid aqueous solution (for mixing the metal compound (C)) and 5.5 parts of lanthanum oxide were added thereto, and was stirred and mixed at room temperature for 1 hour. Next, 60 parts (in terms of resin solid content) of the pigment dispersion resin (D) obtained in Production Example 1 was added, and the mixture was stirred at 1000 rpm for 1 hour at room temperature.

Thereafter, 1.5 parts of 10% tartaric acid aqueous solution was added, then 7.5 parts of the emulsion (1) of the amine-modified epoxy resin obtained in Production Example 4 (in terms of resin solid content, which was used as a emulsion containing an amine-modified epoxy resin (G-1)) was added and mixed, then, 1 part of carbon, 40 parts of titanium oxide and 53.6 parts of Satintone (calcined kaolin) (these being a pigment) were added, and the mixture was stirred at 40 °C for 1 hour at 2000 rpm using a sand mill, to obtain a pigment dispersed paste.

### Production of electrodeposition coating composition

In a stainless steel vessel, 492.8 parts of ion-exchanged water, 375.1 parts of the emulsion (1) of the amine-modified epoxy resin prepared in Production Example 4 (which was used as a rein emulsion (i)), and 87.2 parts of the above pigment dispersion paste were added, and the mixture was then aged at 40°C for 16 hours to obtain an electrodeposition coating composition.

### Example 5

To 107.7 parts of ion exchanged water, 5.3 parts of 50% lactic acid aqueous solution (for bismuth mixing) and 6.9 parts of bismuth oxide were added, so that the solid concentration of the dispersed paste became 47% by mass, and was stirred at room temperature for 1 hour. 8.7 parts of a 50% lactic acid aqueous solution (for mixing the metal compound (C)) and 5.4 parts of neodymium oxide were added thereto, and was stirred and mixed at room temperature for 1 hour. Next, 60 parts (in terms of resin solid content) of the pigment dispersion resin (D) obtained in Production Example 1 was added, and the mixture was stirred at 1000 rpm for 1 hour at room temperature.

Thereafter, 1.5 parts of 10% tartaric acid aqueous solution was added, then 7.5 parts of the emulsion (1) of the amine-modified epoxy resin obtained in Production Example 4 (in terms of resin solid content, which was used as a emulsion containing an amine-modified epoxy resin (G-1)) was added and mixed, then, 1 part of carbon, 40 parts of titanium oxide and 53.6 parts of Satintone (calcined kaolin) (these being a pigment) were added, and the mixture was stirred at 40 °C for 1 hour at 2000 rpm using a sand mill, to obtain a pigment dispersed paste.

Using the obtained pigment dispersion paste, an electrodeposition coating composition was obtained by the same procedure as in Example 4.

### Example 6

To 107.5 parts of ion exchanged water, 5.3 parts of 50% lactic acid aqueous solution (for bismuth mixing) and 6.9 parts of bismuth oxide were added, so that the solid concentration of the dispersed paste became 47% by mass, and was stirred at room temperature for 1 hour. 9.0 parts of a 50% lactic acid aqueous solution (for mixing the metal compound (C)) and 5.7 parts of cerium oxide were added thereto, and was stirred and mixed at room temperature for 1 hour. Next, 60 parts (in terms of resin solid content) of the pigment dispersion resin (D) obtained in Production Example 1 was added, and the mixture was stirred at 1000 rpm for 1 hour at room temperature.

Thereafter, 1.5 parts of 10% tartaric acid aqueous solution was added, then 7.5 parts of the emulsion (1) of the amine-modified epoxy resin obtained in Production Example 4 (in terms of resin solid content, which was used as a emulsion containing an amine-modified epoxy resin (G-1)) was added and mixed, then, 1 part of carbon, 40 parts of titanium oxide and 53.3 parts of Satintone (calcined kaolin) (these being a pigment) were added, and the mixture was stirred at 40 °C for 1 hour at 2000 rpm using a sand mill, to obtain a pigment dispersed paste.

Using the obtained pigment dispersion paste, an electrodeposition coating composition was obtained by the same procedure as in Example 4.

### Example 7

To 103.3 parts of ion exchanged water, 5.3 parts of 50% lactic acid aqueous solution (for bismuth mixing) and 6.9 parts of bismuth oxide were added, so that the solid concentration of the dispersed paste became 47% by mass, and was stirred at room temperature for 1 hour. 14.1 parts of a 50% lactic acid aqueous solution (for mixing the metal compound (C)) and 5.9 parts of yttrium oxide were added thereto, and was stirred and mixed at room temperature for 1 hour. Next, 60 parts (in terms of resin solid content) of the pigment dispersion resin (D) obtained in Production Example 1 was added, and the mixture was stirred at 1000 rpm for 1 hour at room temperature.

Thereafter, 1.5 parts of 10% tartaric acid aqueous solution was added, then 7.5 parts of the emulsion (1) of the amine-modified epoxy resin obtained in Production Example 4 (in terms of resin solid content, which was used as a emulsion containing an amine-modified epoxy resin (G-1)) was added and mixed, then, 1 part of carbon, 40 parts of titanium oxide and 53.1 parts of Satintone (calcined kaolin) (these being a pigment) were added, and the mixture was stirred at 40 °C for 1 hour at 2000 rpm using a sand mill, to obtain a pigment dispersed paste.

Using the obtained pigment dispersion paste, an electrodeposition coating composition was obtained by the same procedure as in Example 4.

### Example 8

To 107.5 parts of ion exchanged water, 5.3 parts of 50% lactic acid aqueous solution (for bismuth mixing) and 6.9 parts of bismuth oxide were added, so that the solid concentration of the dispersed paste became 47% by mass, and was stirred at room temperature for 1 hour. 8.9 parts of a 50% lactic acid aqueous solution (for mixing the metal compound (C)) and 5.4 parts of praseodymium oxide were added thereto, and was stirred and mixed at room temperature for 1 hour. Next, 60 parts (in terms of resin solid content) of the pigment dispersion resin (D) obtained in Production Example 1 was added, and the mixture was stirred at 1000 rpm for 1 hour at room temperature.

Thereafter, 1.5 parts of 10% tartaric acid aqueous solution was added, then 7.5 parts of the emulsion (1) of the amine-modified epoxy resin obtained in Production Example 4 (in terms of resin solid content, which was used as a emulsion containing an amine-modified epoxy resin (G-1)) was added and mixed, then, 1 part of carbon, 40 parts of titanium oxide and 53.6 parts of Satintone (calcined kaolin) (these being a pigment) were added, and the mixture was stirred at 40 °C for 1 hour at 2000 rpm using a sand mill, to obtain a pigment dispersed paste.

Using the obtained pigment dispersion paste, an electrodeposition coating composition was obtained by the same procedure as in Example 4.

### Example 9

To 109.2 parts of ion exchanged water, 5.3 parts of 50% lactic acid aqueous solution (for bismuth mixing) and 6.9 parts of bismuth oxide were added, so that the solid concentration of the dispersed paste became 47% by mass, and was stirred at room temperature for 1 hour. 7.2 parts of a 50% lactic acid aqueous solution (for mixing the metal compound (C)) and 5.3 parts of ytterbium oxide were added thereto, and was stirred and mixed at room temperature for 1 hour. Next, 60 parts (in terms of resin solid content) of the pigment dispersion resin (D) obtained in Production Example 1 was added, and the mixture was stirred at 1000 rpm for 1 hour at room temperature.

Thereafter, 1.5 parts of 10% tartaric acid aqueous solution was added, then 7.5 parts of the emulsion (1) of the amine-modified epoxy resin obtained in Production Example 4 (in terms of resin solid content, which was used as a emulsion containing an amine-modified epoxy resin (G-1)) was added and mixed, then, 1 part of carbon, 40 parts of titanium oxide and 53.7 parts of Satintone (calcined kaolin) (these being a pigment) were added, and the mixture was stirred at 40 °C for 1 hour at 2000 rpm using a sand mill, to obtain a pigment dispersed paste.

Using the obtained pigment dispersion paste, an electrodeposition coating composition was obtained by the same procedure as in Example 4.

### Example 10

Except that an amount of 50% lactic acid aqueous solution as the organic acid (F) was used in total of 8.3 parts by previously using 5.3 parts (for bismuth mixing) and then using 3 parts (for mixing the metal compound (C)), the same procedure as in Example 4 was carried out to prepare a pigment dispersion paste. Using the resulting pigment dispersion paste, an electrodeposition coating composition was obtained in the same procedure as in Example 4.

### Example 11

Except that an amount of 50% lactic acid aqueous solution as the organic acid (F) was used in total of 19.7 parts by previously using 5.3 parts (for bismuth mixing) and then using 14.4 parts (for mixing the metal compound (C)), the same procedure as in Example 4 was carried out to prepare a pigment dispersion paste.

Using the resulting pigment dispersion paste, an electrodeposition coating composition was obtained in the same procedure as in Example 4.

### Example 12

Except that 10% tartaric acid aqueous solution was not used, the same procedure as in Example 4 was carried out to prepare a pigment dispersion paste.

Using the resulting pigment dispersion paste, an electrodeposition coating composition was obtained in the same procedure as in Example 4.

### Example 13

Except that emulsion (1) of amine-modified epoxy resin was not used, the same procedure as in Example 4 was carried out to prepare a pigment dispersion paste.

Using the resulting pigment dispersion paste, an electrodeposition coating composition was obtained in the same procedure as in Example 4.

### Example 14

To 86.5 parts of ion exchanged water, 9.0 parts of 50% lactic acid aqueous solution (for mixing the metal compound (C)) and 5.5 parts of lanthanum oxide were added, so that the solid concentration of the dispersed paste became 47% by mass, and was stirred at room temperature for 1 hour. Next, 60 parts (in terms of resin solid content) of the pigment dispersion resin (D) obtained in Production Example 1 was added, and the mixture was stirred at 1000 rpm for 1 hour at room temperature.

Thereafter, 7.5 parts of the emulsion (1) of the amine-modified epoxy resin obtained in Production Example 4 (in terms of resin solid content, which was used as a emulsion containing an amine-modified epoxy resin (G-1)) was added and mixed, then, 1 part of carbon, 40 parts of titanium oxide and 53.6 parts of Satintone (calcined kaolin) (these being a pigment) were added, and the mixture was stirred at 40 °C for 1 hour at 2000 rpm using a sand mill, to obtain a pigment dispersed paste.

Using the obtained pigment dispersion paste, an electrodeposition coating composition was obtained by the same procedure as in Example 4, except that 20.9 parts of dibutyltin oxide dispersion paste (tin catalyst content: 1.2%) which is a tin catalyst dispersed paste was used.

### Example 15

Except that 50% dimethylolpropionic acid aqueous solution was used in total of 21.3 parts by previously using 7.9 parts (for bismuth mixing) and then using 13.4 parts (for mixing the metal compound (C)), in place of 50% lactic acid aqueous solution, the same procedure as in Example 4 was carried out to prepare a pigment dispersion paste.

Using the resulting pigment dispersion paste, an electrodeposition coating composition was obtained in the same procedure as in Example 4.

### Example 16

Except that 80% methanesulfonic acid aqueous solution was used in total of 9.6 parts by previously using 3.6 parts (for bismuth mixing) and then using 6.0 parts (for mixing the metal compound (C)), in place of 50% lactic acid aqueous solution, the same procedure as in Example 4 was carried out to prepare a pigment dispersion paste.

Using the resulting pigment dispersion paste, an electrodeposition coating composition was obtained in the same procedure as in Example 4.

### Comparative example 1

### Production of pigment dispersion paste

To 116.4 parts of ion exchanged water, 5.3 parts of 50% lactic acid aqueous solution and 6.9 parts of bismuth oxide were added, so that the solid concentration of the dispersed paste became 47% by mass, and was stirred. Next, 60 parts of the pigment dispersion resin (D) obtained in Production Example 1 was added, and the mixture was stirred at 1000 rpm for 1 hour at room temperature.

Thereafter, 1.5 parts of 10% tartaric acid aqueous solution was added and mixed, then, 1 part of carbon, 40 parts of titanium oxide and 59 parts of Satintone (calcined kaolin) (these being a pigment) were added, and the mixture was stirred at 40 °C for 1 hour at 2000 rpm using a sand mill, to obtain a pigment dispersed paste.

### Production of electrodeposition coating composition

In a stainless steel vessel, 492.8 parts of ion-exchanged water, 375.1 parts of the emulsion (1) of the amine-modified epoxy resin (which was used as a rein emulsion (i)), and 87.2 parts of the above pigment dispersion paste were added, and the mixture was then aged at 40°C for 16 hours to obtain an electrodeposition coating composition.

### Comparative example 2

### Production of pigment dispersion paste

To 124.4 parts of ion exchanged water, 60 parts of the pigment dispersion resin (D) was added, and 6.9 parts of bismuth oxide, 5.5 parts of lanthanum oxide, 1 part of carbon, 40 parts of titanium oxide and 53.6 parts of Satintone (calcined kaolin) (these being a pigment) were added and stirred at 40 °C for 1 hour at 2000 rpm using a sand mill, to obtain a pigment dispersed paste.

### Production of electrodeposition coating composition

In a stainless steel vessel, 492.8 parts of ion-exchanged water, 375.1 parts of the emulsion (1) of the amine-modified epoxy resin (which was used as a rein emulsion (i)), and 87.2 parts of the above pigment dispersion paste were added, and the mixture was then aged at 40°C for 16 hours to obtain an electrodeposition coating composition.

Using the electrodeposition coating compositions obtained by the preparation methods of the examples and comparative examples, the following evaluations were performed.

### Preparation of electrodeposition coated sheet having cured electrodeposition coating film

A cold-rolled steel sheet (JIS G 3141, SPCC-SD) was immersed in SURFCLEANER EC 90 (Nippon Paint Co., Ltd.) at 50°C for 2 minutes to perform a degreasing treatment. Next, the steel sheet was immersed in SURFFINE GL 1 (manufactured by Nippon Paint Co., Ltd.) at room temperature for 30 seconds, and immersed in SURFDYNE 6350 (manufactured by Nippon Paint Co., Ltd.) at 35°C for 2 minutes. The steel sheet was rinsed with deionized water. On the other hand, to the electrodeposition coating composition obtained in each of examples and comparative examples, a necessary amount of 2-ethylhexyl glycol was added so that the electrodeposition coating film had a thickness of 15 µm after curing. Thereafter, the steel sheet was fully embedded in the electrodeposition coating composition, and application of a voltage was then immediately started. The voltage was applied under such a condition that the voltage was raised for 30 seconds to 180 V, and the steel sheet was held for 150 seconds. Thus, an uncured electrodeposition film was deposited on the object to be coated (cold-rolled steel sheet). The resulting uncured electrodeposition film was heated and cured at 160°C for 15 minutes to obtain an electrodeposition coated sheet having a cured electrodeposition coating film.

### Edge portion rust prevention property evaluation test

For evaluation in this test, a sample obtained by immersing an L-shaped dedicated replacement blade (LB 10 K: manufactured by OLFA CORPORATION) in a SURFCLEANER EC 90 (manufactured by Nippon Paint Co., Ltd.) at 50°C for 2 minutes to perform a degreasing treatment, adjusting the surface of the blade with SURFFINE GL-1 (manufactured by Nippon Paint Co., Ltd.), and then immersing the blade in SURFDYNE SD-5000 (zinc phosphate chemical conversion solution manufactured by Nippon Paint Co., Ltd.) as a zinc phosphate chemical conversion solution at 40°C for 2 minutes to perform a zinc phosphate chemical conversion treatment was used, in place of the cold-rolled steel sheet. The electrodeposition coating composition obtained in each of the above-described examples and comparative examples was applied to the above-mentioned sample by electrodeposition coating under the same conditions as in the case of the above-described electrodeposition coating, and heated and cured to form a cured electrodeposition coating film, a salt water spraying test (35°C x 168 hours) was then conducted in accordance with JIS Z 2371 (2000), and the number of rusts generated at the tip portion of the L-shaped dedicated replacement blade was counted.

### Evaluation criteria

⊚(⊙) : The number of rusts is less than 10.
○: The number of rusts is 10 or more and less than 20.
○Δ: The number of rusts is 20 or more and less than 50.
Δ: The number of rusts is 50 or more and less than 100.
×: The number of rusts is 100 or more.

### Evaluation of appearance (color unevenness)

The electrodeposition coating composition obtained in each of examples and comparative examples was stirred at 1000 rpm, stirring was then stopped, the steel sheet was fully immersed horizontally, held for 3 minutes, and application of a voltage was started. The voltage was applied under such a condition that the voltage was raised for 30 seconds to 180 V, and the steel sheet was held for 150 seconds. Thus, an uncured electrodeposition film was deposited on the object to be coated (cold-rolled steel sheet). The resulting uncured electrodeposition film was heated and cured at 160°C for 15 minutes to obtain an electrodeposition coated sheet having an electrodeposition coating film. For the electrodeposition coated sheet, presence/absence of defects in the coating film appearance of the upper and lower surfaces was visually evaluated. Evaluation criteria were as follows.

### Evaluation criteria

○: Both the upper and lower surfaces have a uniform coating film appearance, and have no unevenness.
○Δ: The films of the upper and lower surfaces have a part visually recognized as having slight unevenness, but have a substantially uniform coating film appearance as a whole (there is no problem in practical use).
Δ: The films of the upper and lower surfaces have a part visually recognized as having unevenness, and have an uneven coating film appearance as a whole (there is a problem in practical use).
×: The film on the horizontal lower surface side is visually recognized as having marked unevenness (there is a problem in practical use).

### Evaluation of coating performance

Coating performance was evaluated by a suppression performance test of gas pinhole generation during electrodeposition coating. The pretreated galvannealed steel sheet was immersed as a cathode, and the distance between electrodes was 15 cm and the liquid temperature was adjusted to 30 °C. The applied voltage was increased to a predetermined voltage in 30 seconds, and after reaching the predetermined voltage, the applied voltage was held for 150 seconds. The lowest voltage at which pinholes occurred in the electrodeposition coating film after baking and curing was defined as limiting voltage. The higher the limit voltage, the higher the gas pinhole generation voltage, and the better suppression performance of gas pinhole generation can be said.

### Evaluation criteria

○: Gas pinhole is generated at a coating voltage of 50 V or more from a coating voltage of 15 µm.
○Δ: Gas pinhole occurs at a coating voltage of 30 V or more and less than 50 V from the coating voltage of 15 µm.
Δ: Gas pinhole is generated at a coating voltage of 15 µm coat voltage or more and less than 30 V.
×: Gas pinhole occurs at coating voltage less than 15 µm coating voltage.

**[Table 1]**

| | | Example 1 | Example 2 | Example 3 | Example 4 | Example 5 | Example 6 | Example 7 | Example 8 | Example 9 | Example 10 | Example 11 | Example 12 | Example 13 | Example 14 | Example 15 | Example 16 | Comparativ e example 1 | Comparativ e example 2 |
|---|---|---|---|---|---|---|---|---|---|---|---|---|---|---|---|---|---|---|---|
| Metal compound (C) | La | ○ | | ○ | ○ | | | | | | ○ | ○ | ○ | ○ | ○ | ○ | ○ | | ○ |
| | Nd | | ○ | | | ○ | | | | | | | | | | | | | |
| | Ce | | | | | | ○ | | | | | | | | | | | | |
| | Y | | | | | | | ○ | | | | | | | | | | | |
| | Pr | | | | | | | | ○ | | | | | | | | | | |
| | Yb | | | | | | | | | ○ | | | | | | | | | |
| Pigment dispersion resin (D) | | ○ | ○ | ○ | ○ | ○ | ○ | ○ | ○ | ○ | ○ | ○ | ○ | ○ | ○ | ○ | ○ | ○ | ○ |
| Pigment (E) | Carbon black | ○ | ○ | ○ | ○ | ○ | ○ | ○ | ○ | ○ | ○ | ○ | ○ | ○ | ○ | ○ | ○ | ○ | ○ |
| | Titanium oxide | ○ | ○ | ○ | ○ | ○ | ○ | ○ | ○ | ○ | ○ | ○ | ○ | ○ | ○ | ○ | ○ | ○ | ○ |
| | Kaolin | ○ | ○ | ○ | ○ | ○ | ○ | ○ | ○ | ○ | ○ | ○ | ○ | ○ | ○ | ○ | ○ | ○ | ○ |
| Aminated resin (A) (main Em) | | ○ | ○ | ○ | ○ | ○ | ○ | ○ | ○ | ○ | ○ | ○ | ○ | ○ | ○ | ○ | ○ | ○ | ○ |
| Blocked isocyanate curing agent (B) | | ○ | ○ | ○ | ○ | ○ | ○ | ○ | ○ | ○ | ○ | ○ | ○ | ○ | ○ | ○ | ○ | ○ | ○ |
| Organic acid (F) | Lactis acid | | | | ○ | ○ | ○ | ○ | ○ | ○ | ○ | ○ | ○ | ○ | ○ | | | | |
| | DMPA | | | | | | | | | | | | | | | ○ | | | |
| | MSA | | | | | | | | | | | | | | | | ○ | | |
| Sequestr ant (G) | amine-modified epoxy resin (G-1) | | | ○ | ○ | ○ | ○ | ○ | ○ | ○ | ○ | ○ | ○ | | ○ | ○ | ○ | ○ | |
| | polyvalent acid (G-2), tartaric acid | | | ○ | ○ | ○ | ○ | ○ | ○ | ○ | ○ | ○ | | ○ | | ○ | ○ | ○ | |
| C:F (molar ratio) | | - | - | - | 1:1.5 | 1:1.5 | 1:1.5 | 1:1.5 | 1:1.5 | 1:1.5 | 1:0.5 | 1:2.4 | 1:1.5 | 1:1.5 | 1:1.5 | 1:1.5 | 1:1.5 | - | - |
| Bismuth compound (H) | | ○ | ○ | ○ | ○ | ○ | ○ | ○ | ○ | ○ | ○ | ○ | ○ | ○ | | ○ | ○ | ○ | ○ |
| Tin catalyst | | | | | | | | | | | | | | | ○ | | | | |
| Dispersion type | | embodime nt 1 | embodim ent 1 | embodim ent 2 | embodim ent 3 | embodim ent 3 | embodim ent 3 | embodim ent 3 | embodim ent 3 | embodim ent 3 | embodim ent 3 | embodim ent 3 | embodim ent 3 | embodim ent 3 | embodim ent 3 | embodim ent 3 | embodim ent 3 | | |
| Property | edge portion rust prevention property | ○Δ | ○Δ | ○Δ | ⊚ | ○ | ○Δ | ○ | ○Δ | ○Δ | ○Δ | ⊚ | ⊚ | ⊚ | ⊚ | ⊚ | ⊚ | × | ○Δ |
| | Evaluation of appearance (color unevenness) | ○Δ | ○Δ | ○ | ○ | ○ | ○ | ○ | ○ | ○ | ○ | ○Δ | ○Δ | ○Δ | ○ | ○ | ○ | ○ | × |
| | Coating performance | ○Δ | ○Δ | ○Δ | ○ | ○ | ○ | ○ | ○ | ○ | ○ | Δ | ○ | ○ | ○ | ○ | ○ | ○ | ○ |

It was confirmed that the electrodeposition coating compositions obtained in each of examples was excellent in dispersion stability, and the resulting cured electrodeposition coating film had a favorable coating film appearance, and high edge portion rust prevention property.

The electrodeposition coating composition obtained by the method of Comparative Example 1 does not contain the metal compound (C). It was confirmed that the cured electrodeposition coating film obtained using this electrodeposition coating composition was poor in edge portion rust prevention property.

Comparative Example 2 is an example of preparing pigment-dispersed paste by collectively mixing the respective components.
It was confirmed that this electrodeposition coating composition was poor in coating performance, and the resulting cured electrodeposition coating film was poor in coating film appearance.

### Industrial Applicability

The electrodeposition coating composition of the present invention can be suitably used in, for example, undercoating in automobile coating.

## Claims

1. A method for preparing a cationic electrodeposition coating composition, wherein the method comprises a step of mixing a resin emulsion (i) and a pigment dispersion paste, wherein
the resin emulsion (i) comprises an aminated resin (A) and a blocked isocyanate curing agent (B),
the pigment dispersion paste comprises a metal compound (C), a pigment dispersion resin (D) and a pigment (E), and wherein
the metal compound (C) is one or more a metal oxide or a metal hydroxide having at least one metal element selected from the group consisting of La, Nd, Y, Pr, Yb and Ce,
the pigment dispersion paste is prepared by mixing the metal compound (C) and the pigment dispersion resin (D), and
mixing the resultant mixture, the pigment dispersion resin (D) and the pigment (E).

2. A method for preparing a cationic electrodeposition coating composition, wherein the method comprises a step of mixing a resin emulsion (i) and a pigment dispersion paste, wherein
the resin emulsion (i) comprises an aminated resin (A) and a blocked isocyanate curing agent (B),
the pigment dispersion paste comprises a metal compound (C), a pigment dispersion resin (D), a sequestrant (G) and a pigment (E), and wherein
the metal compound (C) is one or more a metal oxide or a metal hydroxide having at least one metal element selected from the group consisting of La, Nd, Y, Pr, Yb and Ce,
the sequestrant (G) comprises one or more selected from the group consisting of an amine-modified epoxy resin (G-1) having a hydroxyl value of 150 to 650 mg KOH/g and an amine value of 30 to 190 mg KOH/g and a polyvalent acid (G-2), and
the pigment dispersion paste is prepared by mixing the metal compound (C), the pigment dispersion resin (D) and the sequestrant (G), and
mixing the resultant mixture, the pigment dispersion resin (D) and the pigment (E).

3. A method for preparing a cationic electrodeposition coating composition, wherein the method comprises a step of mixing a resin emulsion (i) and a pigment dispersion paste, wherein
the resin emulsion (i) comprises an aminated resin (A) and a blocked isocyanate curing agent (B),
the pigment dispersion paste comprises a metal compound (C), a pigment dispersion resin (D), an organic acid (F), a sequestrant (G) and a pigment (E), and wherein
the metal compound (C) is one or more a metal oxide or a metal hydroxide having at least one metal element selected from the group consisting of La, Nd, Y, Pr, Yb and Ce,
The organic acid (F) is one or more compound selected from the group consisting of a hydroxymonocarboxylic acid and a sulfonic acid,
the sequestrant (G) comprises one or more of an amine-modified epoxy resin (G-1) having a hydroxyl value of 150 to 650 mg KOH/g and an amine value of 30 to 190 mg KOH/g or a polyvalent acid (G-2), and
the pigment dispersion paste is prepared by mixing the metal compound (C) and the organic acid (F), and mixing the resultant mixture, the pigment dispersion resin (D) and the sequestrant (G), and mixing the pigment (E).

4. The method for preparing a cationic electrodeposition coating composition according to claim 2 or 3, wherein
the polyvalent acid (G-2) is one or more selected from the group consisting of a compound having two or more carboxylic acid groups, and a compound having a phosphoric acid group.

5. The method for preparing a cationic electrodeposition coating composition according to any of claims 2 to 4, wherein
the polyvalent acid (G-2) is one or more selected from the group consisting of tartaric acid, citric acid, phosphoric acid, condensed phosphoric acid, malic acid and polyacrylic acid.

6. The method for preparing a cationic electrodeposition coating composition according to claim 3, wherein
a ratio of the number of moles of the metal in the metal compound (C) to the number of moles of the organic acid (F) ((C) : (F)) is in a range of 1 : 0.3 to 1 : 2.7.

7. The method for preparing a cationic electrodeposition coating composition according to claim 3 or 6, wherein
the organic acid (F) is one or more selected from the group consisting of lactic acid, dimethylolpropionic acid and methanesulfonic acid.

8. The method for preparing a cationic electrodeposition coating composition according to any of claims 1 to 7, wherein
the metal element in the metal compound (C) is La.

9. The method for preparing a cationic electrodeposition coating composition according to any of claims 1 to 8, wherein
an amount of the metal compound (C) is 0.01 to 2% by mass in terms of a metal element based on a solid content of the resin emulsion (i) in the electrodeposition coating composition.

10. The method for preparing a cationic electrodeposition coating composition according to any of claims 1 to 9, wherein
a ratio of the pigment (E) to the pigment dispersion resin (D) ((E) / (D)) in terms of a solid mass ratio is in a range of 1 / 0.1 to 1 / 1.5.

11. The method for preparing a cationic electrodeposition coating composition according to any of claims 1 to 10, wherein a bismuth compound (H) is mixed together in the mixing of the pigment (E).

12. The method for preparing a cationic electrodeposition coating composition according to any of claims 1 to 10, wherein a bismuth compound (H) is mixed together in the mixing of the metal compound (C).

## Patentansprüche

1. Verfahren zur Herstellung einer kationischen Elektroabscheidungsbeschichtungszusammensetzung, wobei das Verfahren einen Schritt des Vermischens einer Harzemulsion (i) und einer Pigmentdispersionspaste umfasst, wobei
die Harzemulsion (i) ein aminiertes Harz (A) und ein blockiertes Isocyanat-Härtungsmittel (B) umfasst,
die Pigmentdispersionspaste eine Metallverbindung (C), ein Pigmentdispersionsharz (D) und ein Pigment (E) umfasst, wobei
die Metallverbindung (C) eine oder mehrere aus einem Metalloxid oder einem Metallhydroxid zumindest eines Metallelements ist, das aus der aus La, Nd, Y, Pr, Yb und Ce bestehenden Gruppe ausgewählt ist, und
die Pigmentdispersionspaste durch Vermischen der Metallverbindung (C) und des Pigmentdispersionsharzes (D) und durch Vermischen des resultierenden Gemischs, des Pigmentdispersionsharzes (D) und des Pigments (E) hergestellt wird.

2. Verfahren zur Herstellung einer kationischen Elektroabscheidungsbeschichtungszusammensetzung, wobei das Verfahren einen Schritt des Vermischens einer Harzemulsion (i) und einer Pigmentdispersionspaste umfasst, wobei
die Harzemulsion (i) ein aminiertes Harz (A) und ein blockiertes Isocyanat-Härtungsmittel (B) umfasst,
die Pigmentdispersionspaste eine Metallverbindung (C), ein Pigmentdispersionsharz (D), ein Maskierungsmittel (G) und ein Pigment (E) umfasst, wobei
die Metallverbindung (C) eine oder mehrere aus einem Metalloxid oder einem Metallhydroxid zumindest eines Metallelements ist, das aus der aus La, Nd, Y, Pr, Yb und Ce bestehenden Gruppe ausgewählt ist,
das Maskierungsmittel (G) ein oder mehrere, ausgewählt aus der aus einem aminmodifizierten Epoxidharz (G-1) mit einer Hydroxylzahl von 150 bis 650 mg KOH/g und einer Aminzahl von 30 bis 190 mg KOH/g und einer mehrwertigen Säure (G-2) bestehenden Gruppe umfasst und
die Pigmentdispersionspaste durch Vermischen der Metallverbindung (C), des Pigmentdispersionsharzes (D) und des Maskierungsmittels (G) und durch Vermischen des resultierenden Gemischs, des Pigmentdispersionsharzes (D) und des Pigments (E) hergestellt wird.

3. Verfahren zur Herstellung einer kationischen Elektroabscheidungsbeschichtungszusammensetzung, wobei das Verfahren einen Schritt des Vermischens einer Harzemulsion (i) und einer Pigmentdispersionspaste umfasst, wobei
die Harzemulsion (i) ein aminiertes Harz (A) und ein blockiertes Isocyanat-Härtungsmittel (B) umfasst,
die Pigmentdispersionspaste eine Metallverbindung (C), ein Pigmentdispersionsharz (D), eine organische Säure (F), ein Maskierungsmittel (G) und ein Pigment (E) umfasst, wobei
die Metallverbindung (C) eine oder mehrere aus einem Metalloxid oder einem Metalihydroxid zumindest eines Metallelements ist, das aus der aus La, Nd, Y, Pr, Yb und Ce bestehenden Gruppe ausgewählt ist,
die organische Säure (F) eine oder mehrere Verbindungen, ausgewählt aus der aus einer Hxdroxymonocarbonsäure und einer Sulfonsäure bestehenden Gruppe sind,
das Maskierungsmittel (G) eines oder mehrere aus einem aminmodifizierten Epoxidharz (G-1) mit einer Hydroxylzahl von 150 bis 650 mg KOH/g und einer Aminzahl von 30 bis 190 mg KOH/g und einer mehrwertigen Säure (G-2) umfasst und
die Pigmentdispersionspaste durch Vermischen der Metallverbindung (C) und der organischen Säure (F) und durch Vermischen des resultierenden Gemischs, des Pigmentdispersionsharzes (D) und des Maskierungsmittels (G) und Einmischen des Pigments (E) hergestellt wird.

4. Verfahren zur Herstellung einer kationischen Elektroabscheidungsbeschichtungszusammensetzung nach Anspruch 2 oder 3, wobei
die mehrwertige Säure (G-2) eine oder mehrere, ausgewählt aus der aus einer Verbindung mit zwei oder mehr Carbonsäuregruppen und einer Verbindung mit einer Phosphorsäuregruppe bestehenden Gruppe sind.

5. Verfahren zur Herstellung einer kationischen Elektroabscheidungsbeschichtungszusammensetzung nach einem der Ansprüche 2 bis 4, wobei
die mehrwertige Säure (G-2) eine oder mehrere, ausgewählt aus der aus Weinsäure, Citronensäure, Phosphorsäure, kondensierter Phosphorsäure, Apfelsäure und Polyacrylsäure bestehenden Gruppe sind.

6. Verfahren zur Herstellung einer kationischen Elektroabscheidungsbeschichtungszusammensetzung nach Anspruch 3, wobei
das Verhältnis zwischen der Molanzahl des Metalls in der Metallverbindung (C) und der Molanzahl der organischen Säure (F) ((C):(F)) im Bereich von 1:0,3 bis 1:2,7 liegt.

7. Verfahren zur Herstellung einer kationischen Elektroabscheidungsbeschichtungszusammensetzung nach Anspruch 3 oder 6, wobei
die organische Säure (F) eine oder mehrere, ausgewählt aus der aus Milchsäure, Dimethylolpropionsäure und Methansulfonsäure bestehenden Gruppe sind.

8. Verfahren zur Herstellung einer kationischen Elektroabscheidungsbeschichtungszusammensetzung nach einem der Ansprüche 1 bis 7, wobei das Metallelement in der Metallverbindung (C) La ist.

9. Verfahren zur Herstellung einer kationischen Elektroabscheidungsbeschichtungszusammensetzung nach einem der Ansprüche 1 bis 8, wobei
die Menge der Metallverbindung (C), ausgedrückt als das Metallelement, bezogen auf den Feststoffgehalt der Harzemulsion (i) in der Elektroabscheidungsbeschichtungszusammensetzung, 0,01 bis 2 Massen-% beträgt.

10. Verfahren zur Herstellung einer kationischen Elektroabscheidungsbeschichtungszusammensetzung nach einem der Ansprüche 1 bis 9, wobei
das Verhältnis zwischen dem Pigment (E) und dem Pigmentdispersionsharz (D) ((E)/(D)), ausgedrückt als Feststoffverhältnis, im Bereich von 1/0,1 bis 1/1,5 liegt.

11. Verfahren zur Herstellung einer kationischen Elektroabscheidungsbeschichtungszusammensetzung nach einem der Ansprüche 1 bis 10, wobei beim Vermischen des Pigments (E) eine Bismutverbindung (H) zugemischt wird.

12. Verfahren zur Herstellung einer kationischen Elektroabscheidungsbeschichtungszusammensetzung nach einem der Ansprüche 1 bis 10, wobei beim Vermischen der Metallverbindung (C) eine Bismutverbindung (H) zugemischt wird.

## Revendications

1. Procédé de préparation d'une composition de revêtement par électrodéposition cationique, dans lequel le procédé comprend une étape de mélange d'une émulsion de résine (i) et d'une pâte de dispersion pigmentaire, dans lequel
l'émulsion de résine (i) comprend une résine aminée (A) et un agent durcisseur de type isocyanate séquencé (B),
la pâte de dispersion pigmentaires contient un composé métallique (C), une résine de dispersion pigmentaire (D) et un pigment (E), et dans lequel
le composé métallique (C) est un ou plusieurs parmi un oxyde métallique ou un hydroxyde métallique contenant au moins un élément métallique choisi dans le groupe constitué par La, Nd, Y, Pr, Yb et Ce,
la pâte de dispersion pigmentaire est préparée en mélangeant le composé métallique (C) et la résine de dispersion pigmentaire (D), et en mélangeant le mélange ainsi obtenu avec la résine de dispersion pigmentaire (D) et le pigment (E).

2. Procédé de préparation d'une composition de revêtement par électrodéposition cationique, dans lequel le procédé comprend une étape de mélange d'une émulsion de résine (i) et d'une pâte de dispersion pigmentaire, dans lequel
l'émulsion de résine (i) comprend une résine aminée (A) et un agent durcisseur de type isocyanate séquencé (B),
la pâte de dispersion pigmentaire comprend un composé métallique (C), une résine de dispersion pigmentaire (D), un agent séquestrant (G) et un pigment (E), et dans lequel
le composé métallique (C) est un ou plusieurs parmi un oxyde métallique ou un hydroxyde métallique contenant au moins un élément métallique choisi dans le groupe constitué par La, Nd, Y, Pr, Yb et Ce,
l'agent séquestrant (G) comprend un ou plusieurs choisis parmi éléments choisis dans le groupe constitué par une résine époxy modifiée par amine (G-1) ayant un indice d'hydroxyle de 150 à 650 mg KOH/g et un indice d'amine de 30 à 190 mg KOH/g et un acide polyvalent (G-2), et
la pâte de dispersion pigmentaire est préparée en mélangeant le composé métallique (C), la résine de dispersion pigmentaire (D) et l'agent séquestrant (G), et
en mélangeant le mélange résultant, la résine de dispersion pigmentaire (D) et le pigment (E).

3. Procédé de préparation d'une composition de revêtement par électrodéposition cationique, dans lequel le procédé comprend une étape de mélange d'une émulsion de résine (i) et d'une pâte de dispersion pigmentaire, dans lequel
l'émulsion de résine (i) comprend une résine aminée (A) et un agent durcisseur de type isocyanate séquencé (B),
la pâte de dispersion pigmentaire comprend un composé métallique (C), une résine de dispersion pigmentaire (D), un acide organique (F), un agent séquestrant (G) et un pigment (E), et dans lequel
le composé métallique (C) est un ou plusieurs parmi un oxyde métallique ou un hydroxyde métallique contenant au moins un élément métallique choisi dans le groupe constitué par La, Nd, Y, Pr, Yb et Ce,
l'acide organique (F) est un ou plusieurs composés choisis dans le groupe constitué par un acide hydroxymonocarboxylique et un acide sulfonique,
l'agent séquestrant (G) comprend un ou plusieurs d'une résine époxy modifiée par une amine (G-1) contenant un indice d'hydroxyle de 150 à 650 mg KOH/g et un indice d'amine de 30 à 190 mg KOH/g ou d'un acide polyvalent (G-2), et
la pâte de dispersion pigmentaire est préparée en mélangeant le composé métallique (C) et l'acide organique (F), et en mélangeant le mélange résultant, la résine de dispersion pigmentaire (D) et l'agent séquestrant (G), et en mélangeant le pigment (E).

4. Procédé de préparation d'une composition de revêtement par électrodéposition cationique selon la revendication 2 ou 3, dans lequel
l'acide polyvalent (G-2) est un ou plusieurs choisis dans le groupe consistant en un composé contenant deux groupes acide carboxylique ou plus, et un composé contenant un groupe acide phosphorique.

5. Procédé de préparation d'une composition de revêtement par électrodéposition cationique selon l'une quelconque des revendications 2 à 4, dans lequel
l'acide polyvalent (G-2) est un ou plusieurs choisis dans le groupe constitué par l'acide tartrique, l'acide citrique, l'acide phosphorique, l'acide phosphorique condensé, l'acide malique et l'acide polyacrylique.

6. Procédé de préparation d'une composition de revêtement par électrodéposition cationique selon la revendication 3, dans lequel
un rapport du nombre de moles du métal dans le composé métallique (C) au nombre de moles de l'acide organique (F) ((C) : (F)) se situe dans une plage de 1 : 0,3 à 1 : 2,7.

7. Procédé de préparation d'une composition de revêtement par électrodéposition cationique selon la revendication 3 ou 6, dans lequel
l'acide organique (F) est un ou plusieurs choisis dans le groupe constitué par l'acide lactique, l'acide diméthylolpropionique et l'acide méthanesulfonique.

8. Procédé de préparation d'une composition de revêtement par électrodéposition cationique selon l'une quelconque des revendications 1 à 7, dans lequel
l'élément métallique dans le composé métallique (C) est La.

9. Procédé de préparation d'une composition de revêtement par électrodéposition cationique selon l'une quelconque des revendications 1 à 8, dans lequel
une quantité du composé métallique (C) est de 0,01 à 2 % en masse en termes d'un élément métallique sur la base d'une teneur en solide de l'émulsion de résine (i) dans la composition de revêtement d'électrodéposition.

10. Procédé de préparation d'une composition de revêtement par électrodéposition cationique selon l'une quelconque des revendications 1 à 9, dans lequel
un rapport du pigment (E) à la résine de dispersion pigmentaire (D) ((E)/(D)) en termes de rapport de masse solide est compris entre 1/0,1 et 1/1,5.

11. Procédé de préparation d'une composition de revêtement par électrodéposition cationique selon l'une quelconque des revendications 1 à 10, dans lequel un composé de bismuth (H) est mélangé en même temps que le mélange du pigment (E).

12. Procédé de préparation d'une composition de revêtement par électrodéposition cationique selon l'une quelconque des revendications 1 à 10, dans lequel un composé de bismuth (H) est mélangé en même temps que le mélange du composé métallique (C).
